# EUROPÄISCHE PATENTSCHRIFT

(11) **EP 3 325 837 B1**
(45) Veröffentlichungstag und Bekanntmachung des Hinweises auf die Patenterteilung: **04.12.2019**
(21) Anmeldenummer: 16738808.1
(22) Anmeldetag: 15.07.2016
(51) Int. Cl.: F16D 55/225, F16D 65/092, F16D 65/097

(54) **MONTAGEWERKZEUG FÜR BELAGHALTEBÜGEL MIT SICHERUNGSVORRICHTUNG EINER SCHEIBENBREMSE, SCHEIBENBREMSE UND BREMSBELAGSATZ**
FITTING TOOL FOR A BRAKE RETAINING CLIP WITH A SECURING ARRANGEMENT OF A DISK BRAKE, DISK BRAKE, AND BRAKE PAD SET
OUTIL DE MONTAGE D'UN ÉTRIER DE RETENUE DE PLAQUETTE DE FREIN MUNI D'UN DISPOSITIF DE FIXATION D'UN FREIN À DISQUE, FREIN À DISQUE ET JEU DE PLAQUETTES DE FREIN

(30) Priorität: 22.07.2015 DE 102015111847
(43) Veröffentlichungstag der Anmeldung: 30.05.2018
(73) Patentinhaber: KNORR-BREMSE Systeme für Nutzfahrzeuge GmbH, 80809 München (DE)
(72) Erfinder: KRAUSE, Oliver, 82515 Wolfratshausen (DE); KLINGNER, Matthias, 82272 Moorenweis (DE); PESCHEL, Michael, 82296 Schöngeising (DE); SCHÖFBERGER, Tobias, 84048 Mainburg (DE)
(86) Internationale Anmeldenummer: PCT/EP2016/066851
(87) Internationale Veröffentlichungsnummer: WO 2017/013001

(56) Entgegenhaltungen:
- DE-A1-102012 108 667
- DE-B3-102006 039 298
- DE-U1-202008 013 446

## Beschreibung

Die vorliegende Erfindung betrifft ein Montagewerkzeug für Belaghaltebügel mit Sicherungsvorrichtung einer Scheibenbremse nach dem Oberbegriff des Anspruchs 1. Die Erfindung bezieht sich auch auf eine Scheibenbremse und einen Bremsbelagsatz für eine Scheibenbremse.

Bremsbeläge von Scheibenbremsen, insbesondere pneumatische Scheibenbremsen, in Fahrzeugen, z.B. Nutzfahrzeugen, werden in so genannten Belagschächten durch einen Belaghaltebügel gehalten. Damit der Belaghaltebügel nicht durch Querkräfte im Fahrzeug aus seiner Position verschoben werden kann, sind zusätzliche Bauelemente notwendig, die nicht nur ein Verschieben des Haltebügels, insbesondere bei Betrieb, verhindern, sondern auch eine Montage und Demontage ermöglichen. Diese zusätzlichen Bauelemente umfassen z.B. Kombinationen aus Bolzen und Sicherungssplinten, Federelementen und Schrauben. Nach Einsetzen der Bremsbeläge und Montage des Belaghaltebügels kann danach die Anbringung der Bauelemente zur Sicherung vom Mechaniker vergessen werden. Eine Sicherung der Beläge ist damit nur für eine unbestimmte Zeit gegeben, der Fehler ist zwangsläufig nicht auffällig. Der Belaghaltebügel kann im schlimmsten Fall u.U. im Betrieb verrutschen und eine Sicherung der Bremsbeläge beeinträchtigen.

Es sind zahlreiche Vorschläge für derartige Sicherungsbauelemente und Sicherungsvorrichtungen gemacht worden. Ein Beispiel zur Illustration zeigt das Dokument DE 102005045877 B3, ein weiteres wird in dem Dokument DE 202008013446 U1 beschrieben.

DE 10 2012 108667 A1 betrifft eine Anordnung eines Belaghaltebügels am Bremssattel einer Scheibenbremse, wobei im Bremssattel zwei beidseitig an eine Bremsscheibe anpressbare, jeweils eine Belagtragerplatte und einen daran befestigten Reibbelag aufweisende Bremsbeläge angeordnet sind, an denen sich der am Bremssattel gehaltene, eine Montageöffnung überspannende Belaghaltebügel abstützt. Der Belaghaltebügel ist verschiebegesichert an einem Formschlusselement zumindest eines Bremsbelages befestigt. Hierzu weist der Belaghaltebügel eine Fensteröffnung auf, die in Funktionsstellung des Belaghaltebügels von zwei parallel und abständig zueinander angeordnete Rastzungen durchtreten ist, die an der Belaghaltefeder oder einer Haube angeordnet sind. Die Rastzungen weisen an ihren freien Enden nach außen gerichtete Kröpfungen auf, welche in der verschiebegesicherten Endstellung des Belaghaltebügels zugeordnete Randbereiche der Fensteröffnung des Belaghaltebügels überdecken. Zur einfacheren Einführung der Rastzungen ist an den zugeordneten Wandungen der Fensteröffnungen auf der dem Bremsbelag zugewandten Unterseite des Belaghaltebügels jeweils eine Einlaufschräge vorgesehen. Die Rastzungen erstrecken sich rechtwinklig zu einer Bremsscheibenachse nach oben von der Unterseite des Belaghaltebügels durch die Fensteröffnung durch den Belaghaltebügel hindurch.

Es besteht ein ständiger Bedarf für eine vereinfachte Montage und eine vereinfachte Demontage und somit verkürzte Montage und Wartungszeiten.

Der Erfindung liegt die Aufgabe zu Grunde, ein gut handhabbares Montage- und Demontagewerkzeug zu schaffen.

Eine weitere Aufgabe liegt darin, den Belagsatz, mit dem dazugehörigen Sicherungselement beim Transport, beim Handling und im Betriebszustand zu schützen. Insbesondere soll das Werkzeug verhindern, dass das Sicherungselement nicht plastisch verformt wird. Eine weitere Aufgabe besteht darin, eine verbesserte Scheibenbremse zu schaffen.

Eine noch weitere Aufgabe ist es, einen verbesserten Bremsbelagsatz für eine Scheibenbremse bereitzustellen.

Die Erfindung löst diese Aufgabe durch den Gegenstand der Ansprüchen 1 und 3.

Die weiteren Aufgaben werden durch die Gegenstände der Ansprüche 9, 15 und 16. gelöst.

Damit ist eine einfache und schnelle Montage eines Belaghaltebügels an der Sicherungsvorrichtung ermöglich. Das Montagewerkzeug weist einen kompakten Aufbau mit einer Basis auf, an welcher die Spreizeinrichtung und die Führungseinrichtung angebracht sind. So kann das Montagewerkzeug vorteilhaft bei einem Spreizvorgang der Federarme der Sicherungsvorrichtung gleichzeitig geführt werden, wodurch sich eine einfache und schnelle Montage bzw. Demontage ergibt.

Bei der Montage und Demontage weisen die Werkzeuge einen definierten Abstand auf, der bestimmt, wie weit das Sicherungselement gespreizt werden soll oder kann. Ohne das Werkzeug könnte das Sicherungselement bei der Montage und Demontage zu weit gespreizt werden und somit plastisch verformen.

In einer Ausführung weist die Basis eine Grundplatte auf, an welcher zwei Fingerplatten mit jeweils einer Schräge angebracht sind und die Spreizeinrichtung bilden. Dieser Aufbau ist vorteilhaft kompakt gestaltet. Es werden keine zusätzlichen Werkzeuge oder Hilfsmittel benötigt.

Die Führungseinrichtung umfasst zwei Finger mit jeweils einer Schrägfläche, wobei die zwei Finger an der Grundplatte über den zwei Fingerplatten angeordnet sind. Auf diese Weise ist es vorteilhaft möglich, dass bei einem Spreizvorgang durch die Spreizeinrichtung das Montagewerkzeug gleichzeitig durch die Führungseinrichtung an einem Endabschnitt des zu montierenden Belaghaltebügels geführt wird. Durch Schrägflächen, die zur Führung dienen, wird außerdem gleichzeitig eine korrekte Haltung des Montagewerkzeugs erreicht.

Hierzu ist es vorteilhaft, wenn die Schrägflächen zu den zwei Fingerplatten weisen, wodurch sich ein kompakter und zweckmäßiger Aufbau ergibt.

Die Führungseinrichtung weist jeweils eine horizontale Führung an jeweils einem Plattenabschnitt auf. Damit ist eine vorteilhaft einfache und wirksame Führung gebildet.

Das Montagewerkzeug weist weiterhin eine Halteeinrichtung auf. Mittels dieser Halteeinrichtung ist eine Funktionalität des Montagewerkzeugs vorteilhaft erweitert. Das Montagewerkzeug kann somit auf das Sicherungselement der Sicherungsvorrichtung am Bremsbelag in einer Schutzstellung als Schutzelement für Lagerung, Transport und Versand aufgebracht werden. Dadurch vereinfacht sich eine Stapelbarkeit der Bremsbeläge mit den daran angebrachten Sicherungselementen erheblich. Beschädigungen der Sicherungselemente sowie Schäden durch diese können erheblich reduziert werden.

Die Halteeinrichtung umfasst jeweils eine Innenlängswand und eine Außenlängswand mit jeweils einer Aufnahme. Das Montagewerkzeug kann so als Schutzelement einfach auf die Federarme des Sicherungselementes aufgesetzt werden.

Dabei sind die jeweils eine Innenlängswand und jeweils eine Außenlängswand an jeder Längsseite der Grundplatte jeweils parallel zueinander in einem Abstand angeordnet sind, wobei die jeweils eine Aufnahme zwischen der jeweils einen Innenlängswand und jeweils einen Außenlängswand angeordnet ist. Dieser Aufbau bietet den Vorteil, dass gleichzeitig mit der erhöhten Funktionalität eine Versteifung des Montagewerkzeugs erreicht wird.

Gemäß Anspruch 3 weist die Basis einen Querträger auf, an welchem zwei Plattenabschnitte mit jeweils einer Schräge angebracht sind und die Spreizeinrichtung bilden. Dieser Aufbau ist vorteilhaft kompakt und einfach.

Ein besonderer Vorteil eines kompakten Aufbaus wird dadurch erreicht, wenn die Führungseinrichtung jeweils eine Seitenwand mit Führungsabschnitten, die jeweils an einem Plattenabschnitt angebracht sind, umfasst.

In einer anderen Ausführung weist das Montagewerkzeug weiterhin eine Halteeinrichtung auf, durch welche es vorteilhaft einfach an dem Sicherungselement anbringbar ist.

Wenn die Halteeinrichtung aus der Führungseinrichtung mit den Seitenwänden mit Führungsabschnitten gebildet ist, wird ein besonderer Vorteil mehrfacher Funktionalität erreicht.

Alternativ kann die Halteeinrichtung Anschläge und axiale Führungen aufweisen, welche besonders einfach an dem Montagewerkzeug herzustellen sind und eine wirksame Funktion ermöglichen.

Eine erfindungsgemäße Scheibenbremse für ein Fahrzeug, insbesondere für ein Nutzfahrzeug, geht aus Anspruch 9 hervor.

Da das Montagewerkzeug sowohl als Montagewerkzeug als auch als Schutzelement an der Sicherungsvorrichtung verbleiben kann, ist es verliersicher. Eine Montage ist besonders vorteilhaft einfach, da kein Entfernen, sondern nur ein Herausziehen und Rückschieben notwendig sind.

Ein erfindungsgemäßer Bremsbelagsatz für eine Scheibenbremse für ein Fahrzeug, insbesondere für ein Nutzfahrzeug, geht aus Ansprüche 15 und 16 hervor.

In den Zeichnungen sind Ausführungsbeispiele eines erfindungsgemäßen Montagewerkzeugs, einer erfindungsgemäßen Scheibenbremse und eines erfindungsgemäßen Bremsbelagssatzes dargestellt und werden im Folgenden näher beschrieben, wobei auch weitere Vorteile erfindungsgemäßer Ausführungen erläutert werden. Es zeigen:
- Fig. 1: eine schematische Perspektivansicht einer Scheibenbremse mit einer Sicherungsvorrichtung;
- Fig. 2: eine schematische Schnittansicht der Sicherungsvorrichtung in einer y-z-Ebene einer Bremsscheibenachse;
- Fig. 3: eine schematische Perspektivansicht eines ersten Ausführungsbeispiels eines Montagewerkzeugs in Zusammenwirkung mit dem Sicherungselement nach Fig. 2;
- Fig. 4: eine schematische Perspektivansicht des ersten Ausführungsbeispiels des Montagewerkzeugs nach Fig. 3 in einer Schutzstellung;
- Fig. 5: eine schematische Perspektivansicht eines zweiten Ausführungsbeispiels des Montagewerkzeugs in Zusammenwirkung mit dem Sicherungselement nach Fig. 2;
- Fig. 6: eine schematische Perspektivansicht des zweiten Ausführungsbeispiels des Montagewerkzeugs nach Fig. 5 in einer Schutzstellung;
- Fig. 7: eine schematische Perspektivansicht eines dritten Ausführungsbeispiels des Montagewerkzeugs in einer Schutzstellung;
- Fig. 8: eine schematische Perspektivansicht des dritten Ausführungsbeispiels des Montagewerkzeugs nach Fig. 7 in einem Montage-/Demontagezustand;
- Fig. 9: eine schematische Perspektivansicht einer Scheibenbremse mit einer Sicherungsvorrichtung und den dritten Ausführungsbeispiel des Montagewerkzeugs nach Fig. 7;
- Fig. 10: eine schematische Perspektivansicht der Sicherungsvorrichtung mit dem dritten Ausführungsbeispiel des Montagewerkzeugs nach Fig. 9 in einer Schutzstellung; und
- Fig. 11: eine schematische Perspektivansicht des dritten Ausführungsbeispiels des Montage- und Demontagewerkzeugs nach Fig. 9 und Fig. 10.

Nachfolgend werden Begriffe wie "oben", "unten", "rechts", "links" usw. verwendet, welche sich auf Ausrichtungen in den Figuren beziehen. Koordinaten x, y, z in den Figuren dienen der weiteren Orientierung.

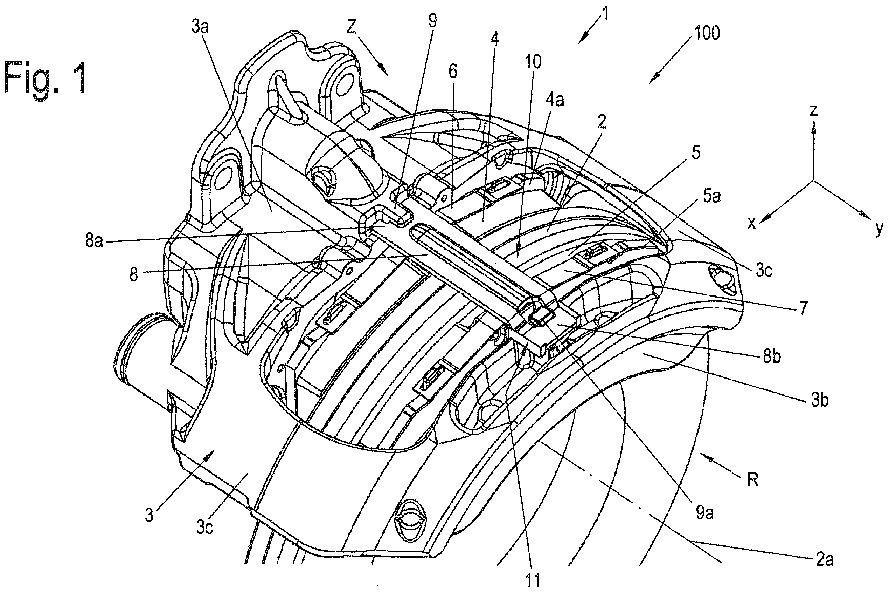

Fig. 1 zeigt eine schematische Perspektivansicht einer Scheibenbremse 1, beispielsweise eine pneumatische Scheibenbremse 1, mit einer Sicherungsvorrichtung 10 zur Arretierung eines Belaghaltebügels 8.

Die Scheibenbremse 1 ist z.B. einem Fahrzeug, insbesondere Nutzfahrzeug, zugeordnet und umfasst eine Bremsscheibe 2 mit einer hier in y-Richtung verlaufenden Bremsscheibendrehachse 2a, einen Bremssattel 3, einen nicht näher bezeichneten Bremsträger und zumindest zwei Bremsbeläge 4 und 5, die jeweils auf einer Belagrückenplatte 4a, 5a aufgebracht sind. Die Bremsbeläge 4 und 5 sind in dem Bremsträger in so genannten Belagschächten aufgenommen und durch einen Belaghaltebügel 8 gehalten, der unten noch beschrieben wird.

Der Bremssattel 3 ist hier als Schiebesattel ausgebildet, an dem ortsfest fixierten Bremsträger in nicht näher beschriebener Weise gehalten und weist einen Zuspannabschnitt 3a und einen Rückenabschnitt 3b auf, welche in y-Richtung an beiden Enden über Verbindungsabschnitte 3c in y-Richtung miteinander verbunden sind. Dabei sind der Zuspannabschnitt 3a und der Rückenabschnitt 3b jeweils auf einer Seite der Bremsscheibe 2 parallel zu dieser angeordnet, wobei sich die Verbindungsabschnitte 3c in y-Richtung parallel zur Bremsscheibendrehachse 2a erstrecken. Der Zuspannabschnitt 3a und der Rückenabschnitt 3b bilden zusammen mit den Verbindungsabschnitten 3c eine Öffnung über der Bremsscheibe 2 mit den Bremsbelägen 4 und 5 zum Zugriff auf die Bremsbelägen 4 und 5 bei Montage, Wechsel und Wartungsarbeiten.

Der Zuspannabschnitt 3a des Bremssattels 3 nimmt eine Zuspannmechanik der Scheibenbremse 1 auf. Die Zuspannmechanik dient zur Betätigung der Scheibenbremse 1 und kann z.B. ein Bremsdrehhebel mit einem Druckluftzylinder sein. Dies wird hier aber nicht näher beschrieben.

Die Seite der Scheibenbremse 1, auf welcher der Zuspannabschnitt 3a des Bremssattels 3 mit der Zuspannmechanik angeordnet ist, wird im Weiteren als Zuspannseite Z bezeichnet. Die andere Seite der Scheibenbremse 1, auf welcher der Rückenabschnitt 3b des Bremssattels 3 angeordnet ist, wird als Rückenseite R, die auch Reaktionsseite genannt wird, im Folgenden bezeichnet. Diese Begriffe "Zuspannseite" und "Rückenseite" und weitere sich darauf beziehende Bezeichnungen sind üblich und dienen zu einer besseren Orientierung.

So wird der Bremsbelag 4 mit der Belagrückenplatte 4a, der sich auf der Zuspannseite Z befindet, als zuspannseitiger Bremsbelag 4 bezeichnet, und der diesem gegenüberliegende wird rückenseitiger Bremsbelag 5 mit der Belagrückenplatte 5a genannt.

Der zuspannseitige Bremsbelag 4 wird von der Zuspannmechanik bei Bremsvorgängen mit einer Zuspannkraft in y-Richtung beaufschlagt. Der rückenseitige Bremsbelag 5 ist im Rückenabschnitt 3b des Bremssattels 3 aufgenommen und weist bei dieser Scheibenbremse 1 mit dem Bremssattel 3 in Schiebesattelausführung keine Relativbewegungen zum Rückenabschnitt 3b auf.

Die Bremsbeläge 4 und 5 sind an den Oberseiten ihrer jeweiligen Belagrückenplatte 4a, 5a jeweils mit einer Belaghaltefeder 6, 7 versehen, welche mit dem Belaghaltebügel 8 zusammenwirken. Der Belaghaltebügel 8 erstreckt sich in y-Richtung über der Öffnung, die von dem Zuspannabschnitt 3a, dem Rückenabschnitt 3b und dem Verbindungsabschnitten 3c über der Bremsscheibe 2 gebildet ist, und ist über den eingebauten Bremsbelägen 4, 5 derart angeordnet, dass er auf die Oberseiten der Belaghaltefedern 6, 7 drückt und so zur Sicherung der Bremsbeläge 4, 5 im Bremsträger dient. Dabei ist der Belaghaltebügel 8 mit einem zuspannseitigen Endabschnitt 8a in einem Lagerabschnitt 9 des Zuspannabschnitts 3a des Bremssattels 3 aufgenommen, wobei ein gegenüberliegender Endabschnitt 8b des Belaghaltebügels 8 mit einem Halteabschnitt 9a des Rückenabschnitts 3b des Bremssattels 3 verbunden ist.

Der Belaghaltebügel 8 ist mit dem Lagerabschnitt 9 und dem Halteabschnitt 9a verbunden und mit einer Sicherungsvorrichtung 10 derart versehen, dass er, z.B. durch auftretende Querkräfte, einerseits in seiner eingebauten Position nicht verschoben werden, und andererseits montiert und demontiert werden kann. Die Sicherungsvorrichtung 10 ist hier im Bereich des rückenseitigen Bremsbelags 5 angeordnet und weist ein Sicherungselement 11 auf, das unten noch weiter erläutert wird.

Mit dem Bezugszeichen 100 ist ein Bremsbelagsatz bezeichnet, welcher die beiden Bremsbeläge 4, 5 auf der jeweiligen Belagrückenplatte 4a, 5a, die zugehörigen Belaghaltefedern 6, 7, den Belaghaltebügel 8 und die Sicherungsvorrichtung 10 umfasst.

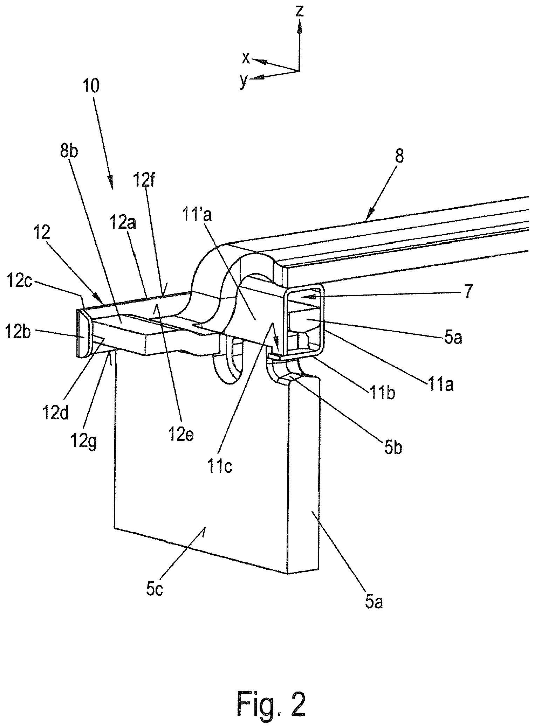

In Fig. 2 ist eine schematische Schnittansicht der Sicherungsvorrichtung 10 in einer y-z-Ebene der Bremsscheibenachse 2a dargestellt.

Die Sicherungsvorrichtung 10 weist das Sicherungselement 11 auf, welches mit einem Körper 11a in einer Hüllenform um den oberen Rand der Belagrückenplatte 5a herum angeordnet ist. Ein Abschnitt 11b des Körpers 11a erstreckt sich durch eine Öffnung 5b der Belagrückenplatte 5a derart, dass dessen Endabschnitt durch die Öffnung 5b nach außen von einer Rückseite 5c der Belagrückenplatte 5a hervorsteht und mit einem außenliegenden Abschnitt des Körpers 11a, und zwar einer Stirnplatte 11'a in einer Verbindung 11c fest verbunden ist, z.B. geschweißt.

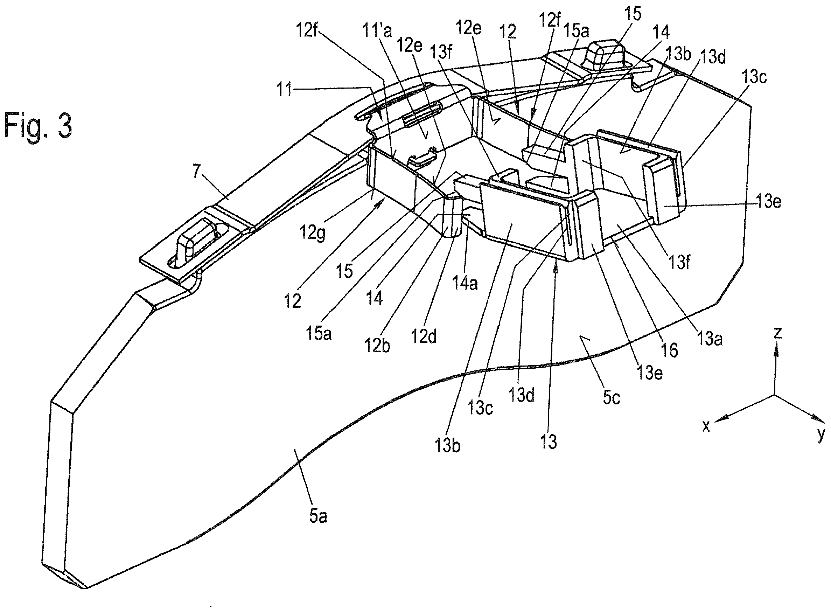

Der Körper 11a und die Stirnplatte 11'a umgeben den oberen Randbereich der Belagrückenplatte 5a, wobei die auf dem Rand der Belagrückenplatte 5a angeordnete Belaghaltefeder 7 mit eingeschlossen ist. Dies ist durch das Bezugszeichen 7 angedeutet und im Zusammenhang mit den weiteren Figuren 3 bis 6 verständlich.

An die Stirnplatte 11'a des Sicherungselementes 11 ist beidseitig jeweils ein Federarm 12 mit einem Laschenabschnitt 12a angeformt. In Fig. 2 ist nur einer dieser gegenüberliegenden Laschenabschnitte 12a gezeigt, wobei der andere im Zusammenhang mit Fig. 1 und Fig. 3 leicht vorstellbar ist. Somit gilt die nachfolgende Beschreibung für beide Laschenabschnitte 12a.

An jedem freien Ende eines jeweiligen Laschenabschnitts 12a ist jeweils eine um 90° umgebogene Lasche 12b angeformt. Diese Laschen 12b sind jeweils zur Bremsscheibendrehachse 2a hin so umgebogen, dass sie spiegelbildlich zu dery-z-Schnittebene der Fig. 2 angeordnet sind. Dies ist auch aus Fig. 1 und 3 ersichtlich.

Der Laschenabschnitt 12a verläuft in einer y-z-Ebene und erstreckt sich in positiver y-Richtung, wobei er an einer bzw. einem Abschnitt des Endabschnitts 8b des Belaghaltebügels 8 anliegt. Die Lasche 12b liegt in einer x-z-Ebene und umgibt eine Ecke des Endabschnitts 8b.

Der Laschenabschnitt 12a weist eine obere Längskante 12f und eine dazu parallele untere Längskante 12g auf. Die Lasche 12b ist mit Schrägen 12c versehen, die auch abgerundet sein können. Schließlich weist die Lasche 12b eine in z-Richtung verlaufende Stirnkante 12d auf. Die Stirnkanten 12d beider Laschen 12b stehen sich spiegelbildlich gegenüber, wie aus den anderen Figuren ersichtlich ist.

Bei der Montage des Belaghaltebügels 8 werden die Federarme 12 des Sicherungselementes 11 mittels eines Montagewerkzeugs 13, 18 in einer x-y-Ebene so voneinander wegbewegt, d.h. so mit einem definierten Abstand gespreizt wird, sodass sich das Federelement nicht plastisch verformt, beziehungsweise die Federarme 12 nicht plastisch verformen, und sodass der Belaghaltebügel 8 im Bremssattel 3 eingesetzt werden kann. Die Federarme 12 bleiben durch das Montagewerkzeug 13, 18 in der gespreizten Stellung vorgespannt. Nachdem der Belaghaltebügel 8 in seine endgültige Position eingesetzt worden ist, wird das Montagewerkzeug 13, 18 wieder entnommen. Dabei federn die Federarme 12 in ihre ursprüngliche Position wieder zurück. Die Federarme 12 sind nun unbelastet und werden während des Betriebs nicht belastet. Dadurch kann ein Setzen der Federarme (z.B. durch Temperatureinwirkung) vermieden werden. Die Laschenabschnitte 12a mit den die Ecken des Endabschnitts 8b des Belaghaltebügels umgreifenden Laschen 12b verhindern ein Verschieben des Belaghaltebügels 8 in Richtung der Bremsscheibendrehachse 2a, d.h. in y-Richtung. Der Belaghaltebügel ist somit gesichert.

Zur Demontage werden die Federarme 12 wiederum mit dem Montagewerkzeug 13, 18 erneut gespreizt, bis die umgreifenden Laschen 12b den Endabschnitt 8b des Belaghaltebügels 8 freigeben. Die Federarme 12 müssen solange in gespannter Stellung gehalten werden, bis der Belaghaltebügel 8 bei der Demontage ausreichend weit verschoben ist.

Die Federarme 12 werden mit dem jeweiligen Montagewerkzeug 13, 18 gespreizt. Dabei wirken die Stirnkanten 12d der Laschen 12b mit dem jeweiligen Montagewerkzeug 13, 18 in Kontakt stehend zusammen. Zusätzlich wird das Montagewerkzeug 13, 18 in geeigneter Weise geführt.

Das Montagewerkzeug 13, 18 kann zudem als ein Schutzelement in einer Schutzstellung eingesetzt werden.

Das Montagewerkzeug 13, 18 umfasst eine Basis, eine Spreizeinrichtung, eine Führungseinrichtung und eine Halteeinrichtung. Die Basis dient als Träger der Spreizeinrichtung, Führungseinrichtung und Halteeinrichtung. Die Spreizeinrichtung wird zum Spreizen der Federarme verwendet, wobei die Führungseinrichtung eine Führung für das Montagewerkzeug bei Montage/Demontage bildet. Mittels der Halteeinrichtung kann das Montagewerkzeug in der Schutzstellung gehalten werden.

Im Folgenden werden zwei Ausführungsbeispiele von Montagewerkzeugen 13, 18 beschrieben.

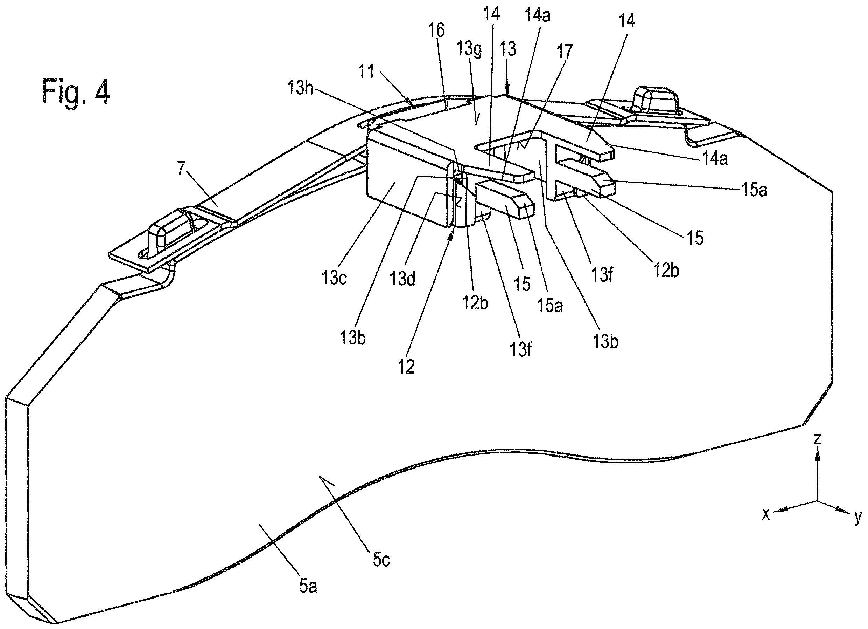

Hierzu zeigt Fig. 3 eine schematische Perspektivansicht eines ersten Ausführungsbeispiels des Montagewerkzeugs 13 in Zusammenwirkung mit dem Sicherungselement 11 nach Fig. 2. Fig. 4 stellt eine schematische Perspektivansicht des ersten Ausführungsbeispiels des Montagewerkzeugs 13 nach Fig. 3 in einer Schutzstellung dar.

In Fig. 3 ist die Rückenplatte 5a eines beispielhaften Bremsbelags 5 des Bremsbelagsatzes 100 mit der Sicherungsvorrichtung 10 dargestellt. Das Sicherungselement 11 ist wie oben beschrieben an der Belagrückenplatte 5a befestigt.

Das Montagewerkzeug 13 weist zwei Funktionen auf. Eine erste Funktion besteht darin, dass das Montagewerkzeug 13 in einer Schutzstellung auf die Federarme 12 des Sicherungselementes 11 aufgesetzt ist und einen Schutz bildet. Dies ist in Fig. 4 dargestellt. In dieser Schutzstellung bildet das Montagewerkzeug 13 einen sicheren Halt der Federarme 12 des Sicherungselementes 11 und schützt diese einerseits vor einem Verbiegen, z.B. bei Verpackung, Transport, Entpacken und Lagerung. Andererseits ist durch diese Schutzfunktion eine günstige Stapelbarkeit der rückenseitigen Bremsbeläge 5 ermöglicht.

Eine zweite Funktion besteht darin, dass das Montagewerkzeug 13 zur Montage und Demontage für Sicherungsvorrichtung 10 und Belaghaltebügel 8 benutzbar ist.

Zur Verwendung des Montagewerkzeugs 13 zur Montage wird dieses aus der Schutzstellung (Fig. 4) entfernt und wie im Weiteren beschrieben verwendet.

Das Montagewerkzeug 13 umfasst eine Grundplatte 13a, zwei Innenlängswände 13b mit zwei Außenlängswänden 13c und einer jeweiligen Aufnahme 13d dazwischen, zwei Fingerplatten 14 und zwei Finger 15.

Die Grundplatte 13a ist rechteckig ausgebildet und liegt hier in einer x-y-Ebene. Die Grundplatte 13a bildet die Basis. An den in y-Richtung verlaufenden Längsseiten der Grundplatte 13a ist jeweils eine Innenlängswand 13b mit einer Außenlängswand 13c angeformt. Die Innenlängswand 13b und die Außenlängswand 13c liegen in y-z-Ebenen rechtwinklig zu der Grundplatte 13a und stehen von einer Fläche der Grundplatte 13a in z-Richtung hervor. Die andere Fläche der Grundplatte 13a bildet eine Außenfläche 13g (siehe Fig. 4).

Die Innenlängswand 13b und die Außenlängswand 13c sind parallel zueinander in einem Abstand angeordnet und an ihren unteren Längsseiten verbunden. Dabei wird die jeweilige Aufnahme 13d zwischen einer Innenlängswand 13b und einer Außenlängswand 13c gebildet. Die Aufnahme 13d ist nach oben geöffnet und weist an dieser Öffnung längsverlaufende Schrägen auf.

Die Innenlängswand 13b und die Außenlängswand 13c bilden zusammen mit der Aufnahme 13d die Halteeinrichtung.

Jede Innenlängswand 13b ist an jedem Ende mit einem laschenartigen Pfosten 13e, 13f verbunden und bildet mit den laschenartigen Pfosten 13e, 13f eine U-förmige Wand. Die Pfosten 13e, 13f sind jeweils an einer Querseite der Grundplatte 13a rechtwinklig zu den Längsseiten angeformt und erstrecken sich jeweils in x-Richtung in einer Breite, die hier jeweils etwa einem Viertel der Länge einer Querseite entspricht. Die Höhe der Pfosten in z-Richtung entspricht einer Höhe der Innenlängswände 13b und Außenlängswände 13c in z-Richtung. Diese Höhen weisen ihrerseits ein Maß auf, welches mindestens so groß ist wie ein Maß eines Laschenabschnitts 12a des Sicherungselementes 11 in z-Richtung.

Zwischen den unteren Enden der Pfosten 13e verläuft eine freie Stirnkante 16 der einen Querseite der Grundplatte 13a. In gleicher Weise ist zwischen den unteren Enden der anderen Pfosten 13f eine freie Stirnkante 17 der anderen Querseite der Grundplatte 13a angeordnet.

Die Grundplatte 13a ist jeweils an einem unteren Ende eines jeweiligen Pfostens 13f in y-Richtung unter Bildung einer Fingerplatte 14 verlängert. Eine Breite einer Fingerplatte 14 in x-Richtung entspricht der Breite eines Pfostens 13f. Eine Länge einer Fingerplatte 14 in y-Richtung entspricht in etwa einem Drittel einer Länge der Grundplatte 13a in y-Richtung. Eine Dicke einer Fingerplatte 14 entspricht der Dicke der Grundplatte 13a. An ihren seitlichen Außenkanten weisen die Fingerplatten 14 jeweils eine Schräge 14a auf. Jede Schräge 14a erstreckt sich von dem jeweiligen freien Ende einer Fingerplatte 14 bis zu deren an der Grundplatte 13a angebrachten anderen Ende.

Die Fingerplatten 14 mit den Schrägen 14a bilden die Spreizeinrichtung.

An den Außenseiten der Pfosten 13f ist in etwa einem Drittel ihrer Höhe jeweils ein sich in y-Richtung erstreckender Finger 15 angeformt. Jeder Finger 15 weist einen quadratischen Querschnitt auf und ist an seinem jeweiligen freien Ende mit einer Schrägfläche 15a versehen. Die Schrägflächen 15a weisen zu den Fingerplatten 14. Ein jeder Finger 15 erstreckt sich in y-Richtung parallel zu einer dazugehörigen Fingerplatte 14 und weist die gleiche Länge dieser Fingerplatte 14 in y-Richtung auf.

Die Finger 15 mit den Schrägflächen 15a bilden die Führungseinrichtung.

Die Pfosten 13e, 13f dienen zur Versteifung, wobei die Pfosten 13f Träger für die Finger 15 der Führungseinrichtung bilden.

In Fig. 3 ist das Montagewerkzeug 13 in einer Montagestellung gezeigt. Dabei weisen die Innenlängswände 13b und die Außenlängswände 13c nach oben. Die schmalen freien Enden der Fingerplatten 14 werden zwischen die Laschen 12b der Federarme 12 des Sicherungselementes 11 so angesetzt, dass die Finger 15 oberhalb der Laschen 12b angeordnet sind. Dabei ist das Montagewerkzeug 13 etwas angewinkelt, d.h. die Ebene der Grundplatte 13a liegt in einem Winkel zu der x-y-Ebene des Sicherungselementes 11. Hierzu dienen die Schrägflächen 15a der Finger 15 auf der Oberfläche des Endabschnitts 8b des Belaghaltebügels 8 als Führung des Montagewerkzeugs 13 und geben den Winkel vor, in welchem das Montagewerkzeug 13 gehalten werden muss. Die Stirnkanten 12d der Laschen 12b stehen jeweils in Kontakt mit dem Anfang der Schrägen 14a der Fingerplatten 14 an deren freien Enden.

Eine Bewegung des Montagewerkzeugs 13 in y-Richtung auf das Sicherungselement 11 zu bewirkt, dass die Schrägen 14a der Fingerplatten 14 die mit ihnen in Kontakt stehenden Stirnkanten 12d und somit die Laschen 12b mit den Federarmen 12 des Sicherungselementes 11 soweit auseinander drücken, dass der Endabschnitt 8b des Belaghaltebügels 8 gemäß Fig. 2 eingesetzt werden kann. Ein Zurückziehen des Montagewerkzeugs 13 lässt die Federarme 12 wieder in ihrer Ausgangsstellung zurückfedern, wobei die Ecken des Endabschnitt 8b des Belaghaltebügels 8 wie in Fig. 2 gezeigt umgriffen werden.

Bei der Demontage, die in Zusammenschau mit Fig. 1 ersichtlich ist, umschließt der Finger 15 den Belaghaltebügel 8b von oben. Die Fingerplatte 14 umschließt den Belaghaltebügel 8b von unten. Die Schrägen 14a öffnen das Sicherungselement bis zu einem definierten Maß (siehe hierzu auch Fig. 4, Rastfläche 13h). Danach wird der Belaghaltebügel 8 mit dem Werkzeug entfernt.

In Fig. 4 ist die Schutzstellung des Montagewerkzeugs 13 dargestellt. Dabei ist das Montagewerkzeug 13 derart auf die Federarme 12 des Sicherungselementes 11 aufgebracht, dass ein jeweiliger Laschenabschnitt 12a eines Federarms 12 in jeweils einer Aufnahme 13d zwischen einer Innenlängswand 13b und einer Außenlängswand 13c aufgenommen ist und mit seiner oberen Längskante 12f am Boden der Aufnahme 13d anliegt. Der Boden einer jeden Aufnahme 13d ist durch die Verbindung zwischen Innenlängswand 13b und Außenlängswand 13c gebildet. Die Schrägen an den Öffnungen der Aufnahmen 13d dienen zur erleichterten Einfädelung der Laschenabschnitte 12a in die jeweiligen Aufnahme 13d.

Die Laschen 12b stehen in der Schutzstellung des Montagewerkzeugs 13 mit ihren Innenseiten mit den Außenseiten der Pfosten 13f in Kontakt.

In der Schutzstellung ist das Montagewerkzeug 13 so angeordnet, dass die Fingerplatten 14 und die Finger 15 von der Rückseite 5c der Belagrückenplatte 5a hervorstehen. Dabei liegt die Grundplatte 13a mit ihrer Außenfläche 13b nach oben, d.h. die Federarme 12 des Sicherungselementes 11 und der Zwischenraum zwischen den Federarmen 12 ist vollständig von dem Montagewerkzeug 13 abgedeckt und geschützt.

Falls der Belag auf den Boden fällt, oder auf andere Art und Weise gestaucht werden sollte, kann die Kraft durch die Finger 15 aufgenommen und durch die Pfosten direkt in den Körper 11a eingeleitet werden, wobei der Körper 11a wiederum an der Belagrückenplatte 5a anliegt.

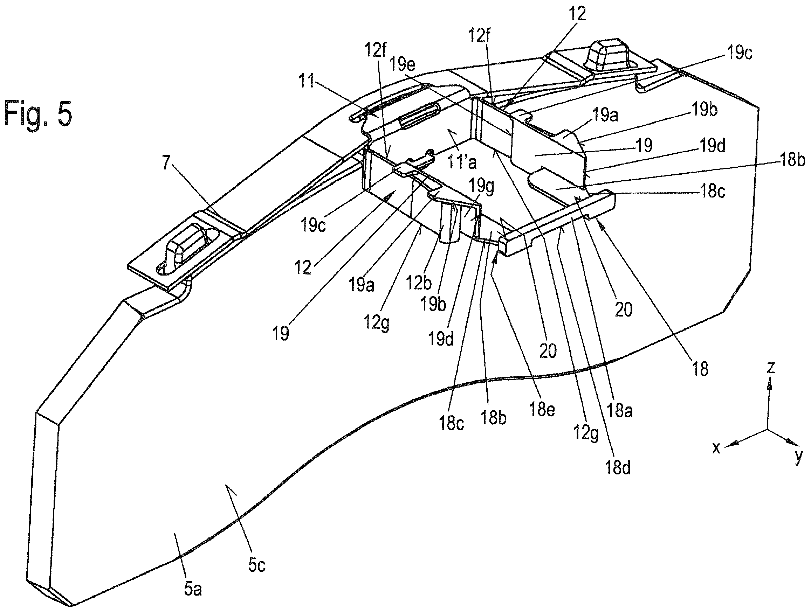

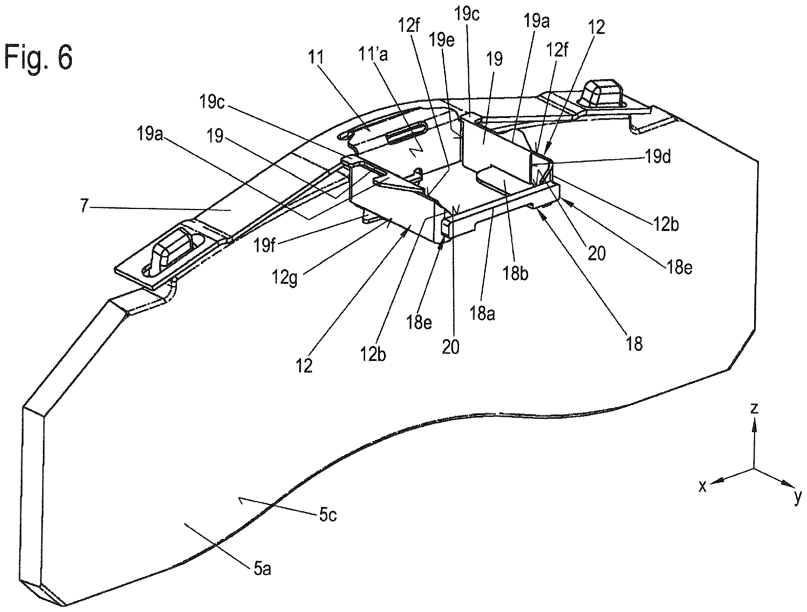

Fig. 5 zeigt eine schematische Perspektivansicht eines zweiten Ausführungsbeispiels des Montagewerkzeugs 18 in Zusammenwirkung mit dem Sicherungselement 11 nach Fig. 2 bei Montage. In Fig. 6 ist eine schematische Perspektivansicht des zweiten Ausführungsbeispiels des Montagewerkzeugs 18 nach Fig. 5 in einer Schutzstellung dargestellt.

Auch dieses zweite Ausführungsbeispiel des Montagewerkzeugs 18 weist die beiden oben beschriebenen Funktionen Schutz und Montagewerkzeug des ersten Ausführungsbeispiels des Montagewerkzeugs 13 auf.

Das Montagewerkzeug 18 ist unterschiedlich zu dem ersten Ausführungsbeispiel aufgebaut und umfasst einen Querträger 18a und zwei streifenartige Plattenabschnitte 18b mit jeweils einer daran rechtwinklig angeformten Seitenwand 19 mit jeweiligen Führungsabschnitten 19a, 19c und 19f.

Der Querträger 18a ist als ein Stab mit einem rechteckigen Querschnitt ausgebildet. Mittig weist er an seiner Unterseite eine längliche Ausnehmung 18d auf. An seinen Enden ist jeweils ein streifenartiger Plattenabschnitt 18d angebracht. Jeder Plattenabschnitt 18d erstreckt sich in einer x-y-Ebene als längliches Rechteck in y-Richtung und ist an seinen an dem Querträger 18a angebrachten Enden jeweils mit einer Schräge 18c an seiner Außenseite versehen. Die Schrägen 18c verlaufen jeweils von außen nach innen auf das jeweilige Verbindungsende des Plattenabschnitts 18d am Querträger 18a zu. Dabei ist an jedem Ende des Querträgers 18a ein Abstand 18e von jedem Ende bis zum Beginn des jeweiligen Verbindungsendes vorgesehen.

Bei diesem Montagewerkzeug 18 bildet der Querträger 18 die Basis.

An jeder Außenlängsseite eines Plattenabschnitts 18b ist jeweils eine Seitenwand 19 angebracht, die von dem Plattenabschnitt 18b senkrecht in z-Richtung nach oben hervorsteht. Jede Seitenwand 19 ist dabei so angebracht, dass ein jeweiliges Ende mit einer Stirnkante 19 von einer Anlagefläche 20 des Querträgers 18 durch die Länge einer Schräge 18c beabstandet ist. Mit anderen Worten, jede Seitenwand 19 ist an einer geraden Außenkante eines Plattenabschnitts 18b angebracht. Dabei erstreckt sich eine Verbindung zwischen einer Innenseite einer Seitenwand 19 und einer geraden Außenkante eines Plattenabschnitts 18b etwa über eine halbe Länge einer Seitenwand 19 in deren Längsrichtung.

An der Oberkante einer jeden Seitenwand 19 sind zwei Führungsabschnitte 19a und 19c angeordnet. Parallel dazu ist an den Unterkante einer jeden Seitenwand 19 ein weiterer Führungsabschnitt 19f angeformt. Die Führungsabschnitte 19a, 19c und 19f liegen in x-y-Ebenen senkrecht zu den Seitenwänden 19, wobei die Führungsabschnitte 19a und 19c in einer gemeinsamen x-y-Ebene verlaufen, die parallel zu der x-y-Ebene des Führungsabschnitts 19f angeordnet ist. Die Führungsabschnitte 19a weisen jeweils eine Schräge 19b auf, die von der jeweilige Stirnkante 19d nach außen hin verläuft. Ein Führungsabschnitt 19c ist jeweils an einem freien Ende einer Seitenwand 19 angeordnet und von dem Führungsabschnitt 19a in y-Richtung beabstandet. Der untere Führungsabschnitt 19f liegt in y-Richtung etwa in der Mitte zwischen den oberen Führungsabschnitten 19a und 19c.

Die Seitenwände 19 mit den Führungsabschnitten 19a, 19b und 19f bilden hier die Führungseinrichtung. Gleichzeitig bilden die Führungsabschnitte 19a, 19b und 19f auch die Halteeinrichtung.

Die Spreizeinrichtung wird hier auch durch die Seitenwände 19 mit den Plattenabschnitten 18b und die Schrägen 18c gebildet.

Bei der Montage wird das Montagewerkzeug 18 mit den Seitenwänden 19 zwischen die Federarme 12 derart eingesetzt, dass die Stirnkanten 12d der Laschen 12b mit den Außenflächen der Seitenwände 19 in Kontakt stehen und auseinander gedrückt werden. Die Schrägen 18c öffnen das Sicherungselement bis zu einem definierten Widerstand - siehe Fig. 5, Rastfläche 19g. Die Seitenwände 19 des Montagewerkzeugs 18 werden an den Laschenabschnitten 12a der Federarme 12 des Sicherungselementes 11 durch die Führungsabschnitte 19a, 19c, 19f geführt. Der Belaghaltebügel 8 kann eingesetzt werden.

Es ist aber auch möglich, dass dieses Montagewerkzeug 18 in seiner eingeschobenen Stellung verbleiben kann, da es den Endabschnitt 8b des Belaghaltebügels 8 nicht behindert. Denn in dieser eingeschobenen Stellung des Montagewerkzeugs 18 zwischen die Federarme 12 können die Federarme 12 auch in ihre Ausgangsstellung zurückfedern. Dies wird dadurch ermöglicht, dass die Laschen 12b der Federarme 12 hinter die Stirnkanten 19d der Seitenwände 19 in die jeweilige Schräge 18c des zugehörigen Plattenabschnitts 18b eingreifen können. Dann liegt die Anlagefläche 20 des Querträgers 18a an den Laschen 12b an (Fig. 6).

Damit ist diese eingeschobene Stellung des Montagewerkzeugs 18 auch die Schutzstellung, die in Fig. 6 gezeigt ist. Die Seitenwände 19 und der Plattenabschnitt 18b schützen die Federarme gegen Verbiegen beim Transport, beim Handling und im Betriebszustand. Gegen Stauchung schützt der Querträger 18a, der die Kraft über die Stirnkante 19e in die Stirnplatte 11a und in die Belagrückenplatte einleitet. Mit anderen Worten, die Schutzstellung des Montagewerkzeugs an dem Bremsbelag 5 wird bei Montage des Belaghaltebügels 8 durch Hervorziehen des Montagewerkzeugs 18 in die Montagestellung gewechselt. Der Belaghaltebügel 8 wird eingesetzt. Dann wird das Montagewerkzeug 18 wieder in seine Ausgangsstellung, die vorher die Schutzstellung war, zurückgeschoben. Der Belaghaltebügel 8 ist nun arretiert, d.h. mit der Sicherungsvorrichtung 10 gesichert.

Somit braucht das Montagewerkzeug 18 aus seiner Schutzstellung anfänglich nur soweit herausgezogen werden, um die Federarme 12 zu spreizen. Dies erfolgt dadurch, dass beim Herausziehen die Laschen 12b mit ihren Stirnkanten 12d mit der jeweiligen Schräge 18c eines Plattenabschnitts 18b in Kontakt kommen und dann nach außen gedrückt werden und weiterhin an den Seitenwänden 19 gespreizt bleiben. Der Belaghaltebügel 8 wird dann wie üblich eingesetzt. Das Montagewerkzeug 18 wird wieder in seine Ausgangsstellung, d.h. in die Schutzstellung, zurückgeschoben. Es kann somit immer an dem Sicherungselement 11 verbleiben und ist verliersicher gehalten.

Die Montagewerkzeuge 13, 18 können aus einem geeigneten Kunststoff hergestellt sein. Beispielsweise kann durch den Einsatz von DuPont Vespel ein Einsatz bis zu 500° C erzielt werden. Natürlich ist auch ein metallischer Werkstoff oder eine Kombination aus unterschiedlichen Werkstoffen möglich.

In einem bevorzugten Ausführungsbeispiel ist das Montagewerkzeug 13 aus Kunststoff und das Montagewerkzeug 18 aus einem metallischen Werkstoff gefertigt. Da das Montagewerkzeug 18 am Belag verbleibt, ist es höheren Temperaturen ausgesetzt, die die Wahl des eingesetzten Werkstoffs einschränken.

Der Bremsbelagsatz 100 umfasst die beiden Bremsbeläge 4,5 auf der jeweiligen Belagrückenplatte 4a, 5a, die zugehörigen Belaghaltefedern 6, 7, den Belaghaltebügel 8, die Sicherungsvorrichtung 10 und mindestens ein Montagewerkzeug 13, 18. Der Bremsbelagsatz 100 kann in allen Scheibenbremsen 1 mit Schiebesattel, insbesondere für Nutzfahrzeuge, eingesetzt werden.

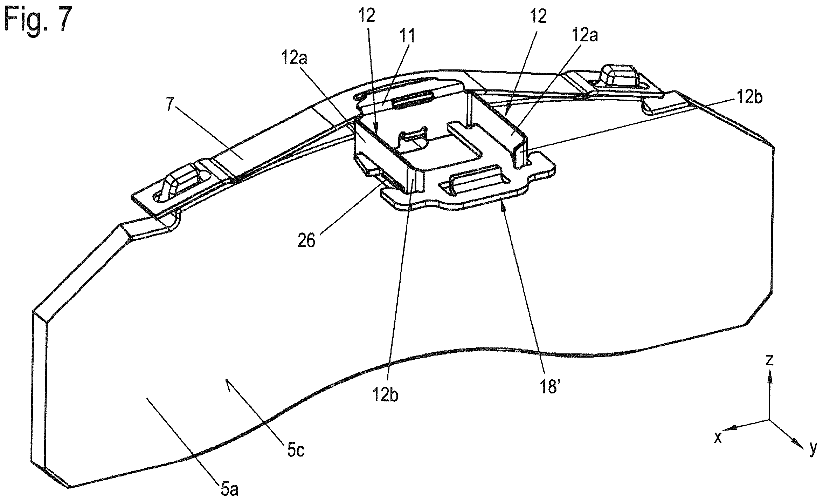

Fig. 7 zeigt eine schematische Perspektivansicht eines dritten Ausführungsbeispiels des Montagewerkzeugs 18' in einer Schutzstellung.

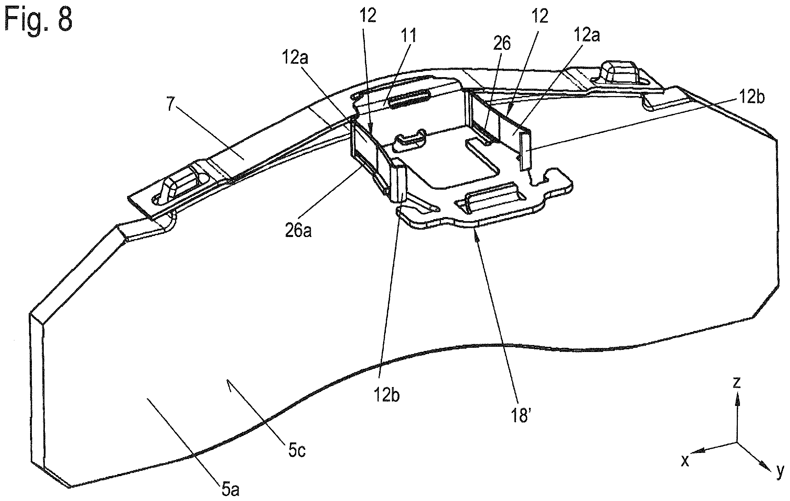

Fig. 8 zeigt eine schematische Perspektivansicht des dritten Ausführungsbeispiels des Montagewerkzeugs 18' in einem Montage-/Demontagezustand.

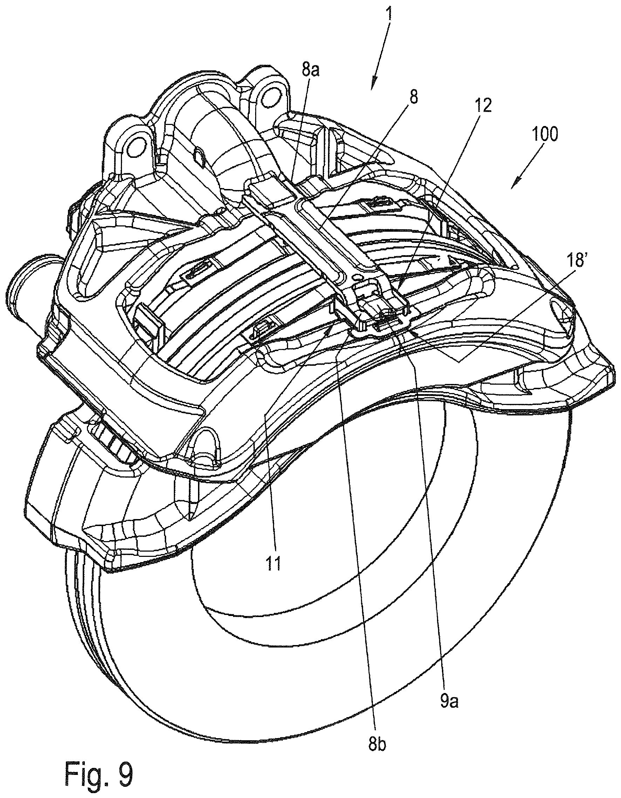

Fig. 9 zeigt eine schematische Perspektivansicht einer Scheibenbremse 1 mit einer Sicherungsvorrichtung 11 und dem dritten Ausführungsbeispiels des Montagewerkzeugs 18' als Montage-/Demontagewerkzeug.

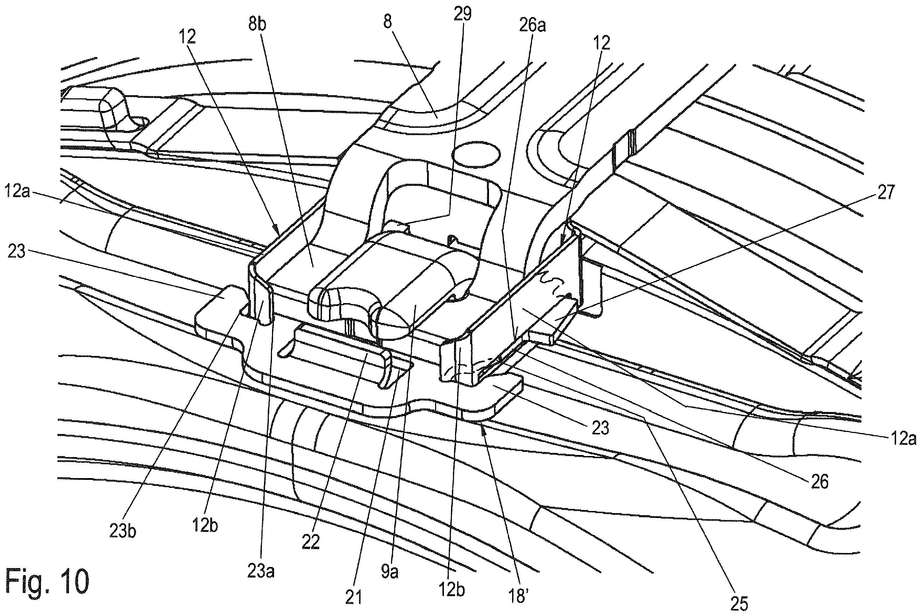

Fig. 10 zeigt eine schematische Perspektivansicht der Sicherungsvorrichtung 11 mit dem dritten Ausführungsbeispiels des Montagewerkzeugs 18' als Montage-/Demontagewerkzeug nach Fig. 9 in einer Schutzstellung.

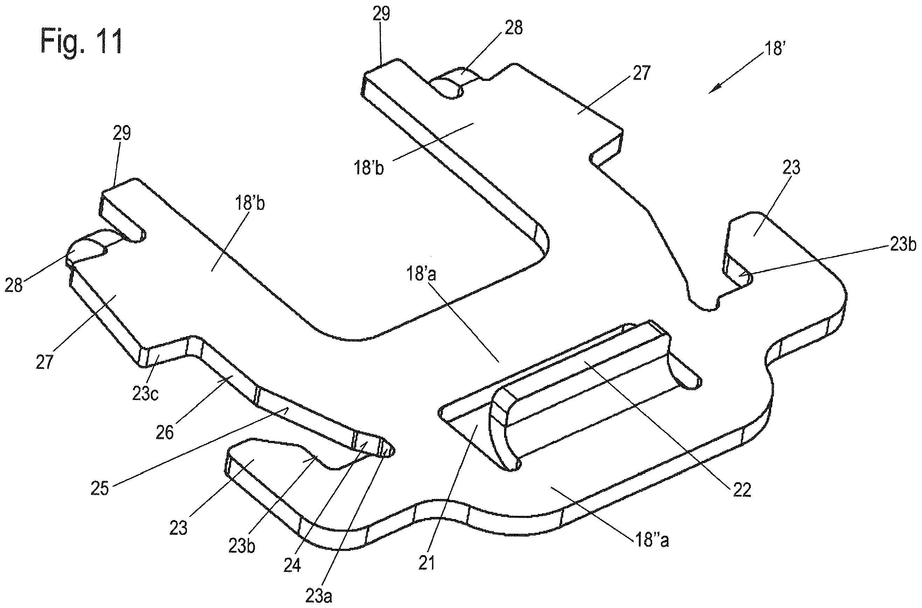

Fig. 11 zeigt eine schematische Perspektivansicht des Montage- und Demontagewerkzeugs 18 nach Fig. 9 und Fig. 10. Das Montage- und Demontagewerkzeug ist als eine Schelle ausgeführt. So kann das Werkzeug 18 aus einem Blech gefertigt sein. Das Werkzeug 18 ist symmetrisch aufgebaut.

Das dritte Ausführungsbeispiel des Montagewerkzeugs 18' weist einen Querträger 18'a auf, an welchem ähnlich wie im zweiten Ausführungsbeispiel an beiden Enden jeweils ein Plattenabschnitt 18'b angeformt ist.

Vor dem Querträger 18'a ist ein weiterer Querträger 18"a angebracht, welcher an seinen Enden mit jeweils einem sich nach hinten (in negativer y-Richtung) erstreckenden Hakenabschnitt 23 versehen ist.

In der Mitte des zweiten Querträgers 18"a ist eine Aussparung 21 eingeformt, an deren vorderer Seite eine Lasche 22 nach oben hochgebogen angebracht ist.

Die Lasche 22 erleichtert das Demontieren mit einem Hilfswerkzeug wie beispielsweise einem Schraubenzieher.

Zur Demontage kann ein nicht dargestelltes Hilfswerkzeug in die Aussparung 21 im Montagewerkzeug 18' eingesetzt werden. Als Hilfswerkzeug kann beispielsweise ein Schraubendreher, insbesondere ein Schlitzschraubendreher, verwendet werden. Dabei wird die Klinge des Schraubendrehers in die Aussparung 21 zwischen der Lasche 22 und der Kante des Endabschnitts 8b des Belaghaltebügels 8 eingeschoben und das Montagewerkzeug 18' durch eine Hebelbewegung in y-Richtung (siehe Fig. 7) gelöst.

Anschlag 23a schützt das Sicherungselement 11 beim Transport, beim Handling und im Betriebszustand gegen Verbiegen.

Ein zusätzlicher Anschlag 23b schützt das Sicherungselement 11 beim Transport, beim Handling und im Betriebszustand gegen Spreizen.

Ein axialer Anschlag 23c schlägt bei Montage/ Demontage an einem Führungsschlitz 26a im jeweiligen Laschenabschnitt 12a des Sicherungselementes 11 an.

Eine Anlaufschräge 24 gibt bei Montage/ Demontage einen definierten Anfangswiderstand. Des Weiteren verhindert die Anlaufschräge 24 ein unfreiwilliges Öffnen im Betriebszustand.

Eine Öffnungsschräge 25 ist jeweils an einer Außenkante eines Übergangs eines jeden Plattenabschnitts 18'b zum Querabschnitt 18'a vorgesehen, um das Sicherungselement 11 zur Demontage zu spreizen
Abschnitte 26 auf zwei sich gegenüberliegenden Außenseiten der Plattenabschnitte 18'b für das Spreizen des Sicherungselementes 11 mit einem definierten Abstand

Eine horizontale Führung 27 an den Plattenabschnitten 18'b des Montagewerkzeugs 18' wird jeweils durch den Führungsschlitz 26a in einem jeweiligen Laschenabschnitt 12a des Sicherungselementes 11 horizontal geführt (siehe Fig. 10).

Eine axiale Führung 28 ist durch Umlegen dieser Lasche gebildet. Auf diese Weise kann das Montagewerkzeug 18' weder kippen noch sich verdrehen.

Weiterhin ist jeweils ein Anschlag 29 an jedem hinteren Ende eines Plattenabschnitts 18'b vorgesehen, um die Kräfte bei Stauchung in die Belagrückenplatte 5a zu leiten.

Die oben beschriebenen Ausführungsbeispiele schränken die Erfindung nicht ein. Die Erfindung ist im Rahmen der beigefügten Ansprüche modifizierbar.

### Bezugszeichenliste

- 1: Scheibenbremse
- 2: Bremsscheibe
- 2a: Bremsscheibendrehachse
- 3: Bremssattel
- 3a: Zuspannabschnitt
- 3b: Reaktionsabschnitt
- 3c: Verbindungsabschnitt
- 4,5: Bremsbelag
- 4a, 5a: Belagrückenplatte
- 5b: Öffnung
- 5c: Rückseite
- 6,7: Belaghaltefeder
- 8: Belaghaltebügel
- 8a, 8b: Endabschnitt
- 9: Lagerabschnitt
- 9a: Halteabschnitt
- 10: Sicherungsvorrichtung
- 11: Sicherungselement
- 11a: Körper
- 11'a: Stirnplatte
- 11b: Abschnitt
- 11c: Verbindung
- 12: Federarm
- 12a: Laschenabschnitt
- 12b: Lasche
- 12c: Schräge
- 12d: Stirnkante
- 12e: Innenseite
- 12f, 12g: Längskante
- 13: Montagewerkzeug
- 13a: Grundplatte
- 13b: Innenlängswand
- 13c: Außenlängswand
- 13d: Aufnahme
- 13e, 13f: Pfosten
- 13g: Außenfläche
- 13h: Rastfläche
- 14: Fingerplatte
- 14a: Schräge
- 15: Finger
- 15a: Schräge
- 16,17: Querkante
- 18, 18': Montagewerkzeug
- 18a, 18'a, 18"a: Querträger
- 18b,18'b: Plattenabschnitt
- 18c: Schräge
- 18d: Ausnehmung
- 18e: Abstand
- 19: Seitenwand
- 19a, 19c, 19f: Führungsplatte
- 19b: Schräge
- 19d, 19e: Stirnkante
- 19g: Rastfläche
- 20: Anlagefläche
- R: Rückenseite
- Z: Zuspannseite
- x, y, z: Koordinaten
- 21: Aussparung
- 22: Lasche
- 23a, 23b, 23c: Anschlag
- 24: Anlaufschräge
- 25: Öffnungsschräge
- 26: Abschnitt
- 26a: Führungsschlitz
- 27: Horizontale Führung
- 28: Axiale Führung
- 29: Anschlag

## Patentansprüche

1. Montagewerkzeug (13) zur Montage und/oder Demontage eines Belaghaltebügels (8) an einer Sicherungsvorrichtung (10) einer Scheibenbremse (1), wobei die Sicherungsvorrichtung (10) ein mit einer rückenseitigen Belagträgerplatte (5a) eines rückenseitigen Bremsbelags (5) der zuzuordnenden Scheibenbremse (1) fest verbundenes Sicherungselement (11) mit mindestens zwei Federarmen (12) aufweist, wobei jeder Federarm (12) einen Laschenabschnitt (12a) mit einer an seinem freien Ende umgebogenen Lasche (12b) aufweist, wobei die Laschen (12b) jeweils zu einer Bremsscheibendrehachse (2a) der zuzuordnende Scheibenbremse (1) hin umgebogen und spiegelbildlich angeordnet sind, wobei sich jeder Laschenabschnitt (12a) in der Richtung der Bremsscheibendrehachse (2a) erstreckt und an einem Abschnitt eines Endabschnitts (8b) des Belaghaltebügels (8) anliegt, und wobei jede Lasche (12b) eine Ecke des Endabschnitts (8b) des Belaghaltebügels (8) umgibt, **dadurch gekennzeichnet, dass** das Montagewerkzeug (13) eine Basis, eine Spreizeinrichtung und eine Führungseinrichtung aufweist, wobei die Basis eine Grundplatte (13a) aufweist, an welcher zwei Fingerplatten (14) mit jeweils einer Schräge (14a) angebracht sind und die Spreizeinrichtung bilden, wobei die Führungseinrichtung zwei Finger (15) mit jeweils einer Schrägfläche (15a) umfasst, wobei die zwei Finger (15) an der Grundplatte (13a) über den zwei Fingerplatten (14) angeordnet sind, wobei das Montagewerkzeug (13) weiterhin eine Halteeinrichtung aufweist, wobei die Halteeinrichtung jeweils eine Innenlängswand (13b) und eine Außenlängswand (13c) mit jeweils einer Aufnahme (13d) umfasst, und wobei die jeweils eine Innenlängswand (13b) und jeweils eine Außenlängswand (13c) an jeder Längsseite der Grundplatte (13a) jeweils parallel zueinander in einem Abstand angeordnet sind, wobei die jeweils eine Aufnahme (13d) zwischen der jeweils einen Innenlängswand (13b) und jeweils einen Außenlängswand (13c) angeordnet ist.

2. Montagewerkzeug (13) nach Anspruch 1, **dadurch gekennzeichnet, dass** die Schrägflächen (15a) zu den zwei Fingerplatten (14) weisen.

3. Montagewerkzeug (18, 18') zur Montage und/oder Demontage eines Belaghaltebügels (8) an einer Sicherungsvorrichtung (10) einer Scheibenbremse (1), wobei die Sicherungsvorrichtung (10) ein mit einer rückenseitigen Belagträgerplatte (5a) eines rückenseitigen Bremsbelags (5) der zuzuordnenden Scheibenbremse (1) fest verbundenes Sicherungselement (11) mit mindestens zwei Federarmen (12) aufweist, wobei jeder Federarm (12) einen Laschenabschnitt (12a) mit einer an seinem freien Ende umgebogenen Lasche (12b) aufweist, wobei die Laschen (12b) jeweils zu einer Bremsscheibendrehachse (2a) der zuzuordnende Scheibenbremse (1) hin umgebogen und spiegelbildlich angeordnet sind, wobei sich jeder Laschenabschnitt (12a) in der Richtung der Bremsscheibendrehachse (2a) erstreckt und an einem Abschnitt eines Endabschnitts (8b) des Belaghaltebügels (8) anliegt, und wobei jede Lasche (12b) eine Ecke des Endabschnitts (8b) des Belaghaltebügels (8) umgibt, **dadurch gekennzeichnet, dass** das Montagewerkzeug (18, 18') eine Basis, eine Spreizeinrichtung und eine Führungseinrichtung aufweist, wobei die Basis einen Querträger (18a, 18'a, 18"a) aufweist, an welchem zwei Plattenabschnitte (18b, 18'b) mit jeweils einer Schräge (18c, 25) angebracht sind und die Spreizeinrichtung bilden.

4. Montagewerkzeug (18) nach Anspruch 3, **dadurch gekennzeichnet, dass** die Führungseinrichtung jeweils eine Seitenwand (19) mit Führungsabschnitten (19a, 19c, 19f), die jeweils an einem Plattenabschnitt (18b) angebracht sind, umfasst.

5. Montagewerkzeug (18') nach Anspruch 3, **dadurch gekennzeichnet, dass** die Führungseinrichtung jeweils eine horizontale Führung (27) an jeweils einem Plattenabschnitt (18'b) aufweist.

6. Montagewerkzeug (18) nach Anspruch 4 oder 5, **dadurch gekennzeichnet, dass** das Montagewerkzeug (18, 18') weiterhin eine Halteeinrichtung aufweist.

7. Montagewerkzeug (18) nach Anspruch 6, **dadurch gekennzeichnet, dass** die Halteeinrichtung aus der Führungseinrichtung mit den Seitenwänden (19) mit Führungsabschnitten (19a, 19c, 19f) gebildet ist.

8. Montagewerkzeug (18') nach Anspruch 6, **dadurch gekennzeichnet, dass** die Halteeinrichtung Anschläge (23c) und axiale Führungen (28) aufweist.

9. Scheibenbremse (1) für ein Fahrzeug, insbesondere für ein Nutzfahrzeug, aufweisend eine Bremsscheibe (2) mit einer Bremsscheibendrehachse (2a), einen Bremssattel (3), insbesondere ein Schiebesattel, mit einem Zuspannabschnitt (3a) und einem Rückenabschnitt (3b), mindestens zwei Bremsbeläge (4,5) mit jeweils einer mit einer Belaghaltefeder (6, 7) versehenen Belagrückenplatte (4a, 5a), die jeweils unter Vorspannung von einem am Bremssattel (3) lösbar befestigten Belaghaltebügel (8) abgestützt sind und von denen ein zuspannseitiger Bremsbelag (4) dem Zuspannabschnitt (3a) zugeordnet ist, und ein rückenseitiger Bremsbelag (5) dem Rückenabschnitt (3b) zugeordnet ist, sowie eine Sicherungsvorrichtung (10) zur Sicherung der Position des Belaghaltebügels (8), wobei die Sicherungsvorrichtung (10) ein mit der rückenseitigen Belagträgerplatte (5a) des rückenseitigen Bremsbelags (5) fest verbundenes Sicherungselement (11) mit zwei Federarmen (12) aufweist, die mit jeweils einem Endabschnitt (8b) des Belaghaltebügels (8) in Eingriff stehen, wobei jeder Federarm (12) einen Laschenabschnitt (12a) mit einer an seinem freien Ende umgebogenen Lasche (12b) aufweist, wobei die Laschen (12b) jeweils zu der Bremsscheibendrehachse (2a) hin umgebogen und spiegelbildlich angeordnet sind, wobei sich jeder Laschenabschnitt (12a) in der Richtung der Bremsscheibendrehachse (2a) erstreckt und an einem Abschnitt eines Endabschnitts (8b) des Belaghaltebügels (8) anliegt, und wobei jede Lasche (12b) eine Ecke des Endabschnitts (8b) des Belaghaltebügels (8) umgibt, **dadurch gekennzeichnet, dass** das Sicherungselement (11) der Sicherungsvorrichtung (10) mit einem Montagewerkzeug (18, 18') versehen ist, wobei das Montagewerkzeug (18, 18') eine Basis, eine Spreizeinrichtung und eine Führungseinrichtung aufweist, wobei die Basis einen Querträger (18a, 18'a, 18"a) aufweist, an welchem zwei Plattenabschnitte (18b, 18'b) mit jeweils einer Schräge (18c, 25) angebracht sind und die Spreizeinrichtung bilden.

10. Scheibenbremse (1) nach Anspruch 9, **dadurch gekennzeichnet, dass** die Führungseinrichtung des Montagewerkzeugs (18) jeweils eine Seitenwand (19) mit Führungsabschnitten (19a, 19c, 19f), die jeweils an einem Plattenabschnitt (18b) angebracht sind, umfasst.

11. Scheibenbremse (1) nach Anspruch 9, **dadurch gekennzeichnet, dass** die Führungseinrichtung des Montagewerkzeugs (18') jeweils eine horizontale Führung (27) an jeweils einem Plattenabschnitt (18'b) aufweist.

12. Scheibenbremse (1) nach Anspruch 10 oder 11, **dadurch gekennzeichnet, dass** das Montagewerkzeug (18, 18') weiterhin eine Halteeinrichtung aufweist.

13. Scheibenbremse (1) nach Anspruch 12, **dadurch gekennzeichnet, dass** die Halteeinrichtung des Montagewerkzeugs (18) aus der Führungseinrichtung mit den Seitenwänden (19) mit Führungsabschnitten (19a, 19c, 19f) gebildet ist.

14. Scheibenbremse (1) nach Anspruch 12, **dadurch gekennzeichnet, dass** die Halteeinrichtung des Montagewerkzeugs (18') Anschläge (23c) und axiale Führungen (28) aufweist.

15. Bremsbelagsatz (100) für eine Scheibenbremse (1) für ein Fahrzeug, insbesondere für ein Nutzfahrzeug, wobei die Scheibenbremse (1) eine Bremsscheibe (2) mit einer Bremsscheibendrehachse (2a), einen Bremssattel (3), insbesondere ein Schiebesattel, mit einem Zuspannabschnitt (3a) und einem Rückenabschnitt (3b), mindestens zwei Bremsbeläge (4, 5) mit jeweils einer mit einer Belaghaltefeder (6, 7) versehenen Belagrückenplatte (4a, 5a), die jeweils unter Vorspannung von einem am Bremssattel (3) lösbar befestigten Belaghaltebügel (8) abgestützt sind und von denen ein zuspannseitiger Bremsbelag (4) dem Zuspannabschnitt (3a) zugeordnet ist, und ein rückenseitiger Bremsbelag (5) dem Rückenabschnitt (3b) zugeordnet ist, sowie eine Sicherungsvorrichtung (10) zur Sicherung der Position des Belaghaltebügels (8) umfasst, wobei die Sicherungsvorrichtung (10) ein mit der rückenseitigen Belagträgerplatte (5a) des rückenseitigen Bremsbelags (5) fest verbundenes Sicherungselement (11) mit zwei Federarmen (12) aufweist, die mit jeweils einem Endabschnitt (8b) des Belaghaltebügels (8) in Eingriff stehen, wobei jeder Federarm (12) einen Laschenabschnitt (12a) mit einer an seinem freien Ende umgebogenen Lasche (12b) aufweist, wobei die Laschen (12b) jeweils zu der Bremsscheibendrehachse (2a) hin umgebogen und spiegelbildlich angeordnet sind, wobei sich jeder Laschenabschnitt (12a) in der Richtung der Bremsscheibendrehachse (2a) erstreckt und an einem Abschnitt eines Endabschnitts (8b) des Belaghaltebügels (8) anliegt, und wobei jede Lasche (12b) eine Ecke des Endabschnitts (8b) des Belaghaltebügels (8) umgibt, **dadurch gekennzeichnet, dass** der Bremsbelagsatz (100) die beiden Bremsbeläge (4, 5) auf der jeweiligen Belagrückenplatte (4a, 5a), die zugehörigen Belaghaltefedern (6, 7), den Belaghaltebügel (8), die Sicherungsvorrichtung (10) und mindestens ein Montagewerkzeug (13) umfasst, wobei das Montagewerkzeug (13) eine Basis, eine Spreizeinrichtung und eine Führungseinrichtung aufweist, wobei die Basis eine Grundplatte (13a) aufweist, an welcher zwei Fingerplatten (14) mit jeweils einer Schräge (14a) angebracht sind und die Spreizeinrichtung bilden, wobei die Führungseinrichtung zwei Finger (15) mit jeweils einer Schrägfläche (15a) umfasst, wobei die zwei Finger (15) an der Grundplatte (13a) über den zwei Fingerplatten (14) angeordnet sind, wobei das Montagewerkzeug (13) weiterhin eine Halteeinrichtung aufweist, wobei die Halteeinrichtung jeweils eine Innenlängswand (13b) und eine Außenlängswand (13c) mit jeweils einer Aufnahme (13d) umfasst, und wobei die jeweils eine Innenlängswand (13b) und jeweils eine Außenlängswand (13c) an jeder Längsseite der Grundplatte (13a) jeweils parallel zueinander in einem Abstand angeordnet sind, wobei die jeweils eine Aufnahme (13d) zwischen der jeweils einen Innenlängswand (13b) und jeweils einen Außenlängswand (13c) angeordnet ist.

16. Bremsbelagsatz (100) für eine Scheibenbremse (1) für ein Fahrzeug, insbesondere für ein Nutzfahrzeug, wobei die Scheibenbremse (1) eine Bremsscheibe (2) mit einer Bremsscheibendrehachse (2a), einen Bremssattel (3), insbesondere ein Schiebesattel, mit einem Zuspannabschnitt (3a) und einem Rückenabschnitt (3b), mindestens zwei Bremsbeläge (4,5) mit jeweils einer mit einer Belaghaltefeder (6, 7) versehenen Belagrückenplatte (4a, 5a), die jeweils unter Vorspannung von einem am Bremssattel (3) lösbar befestigten Belaghaltebügel (8) abgestützt sind und von denen ein zuspannseitiger Bremsbelag (4) dem Zuspannabschnitt (3a) zugeordnet ist, und ein rückenseitiger Bremsbelag (5) dem Rückenabschnitt (3b) zugeordnet ist, sowie eine Sicherungsvorrichtung (10) zur Sicherung der Position des Belaghaltebügels (8) umfasst, wobei die Sicherungsvorrichtung (10) ein mit der rückenseitigen Belagträgerplatte (5a) des rückenseitigen Bremsbelags (5) fest verbundenes Sicherungselement (11) mit zwei Federarmen (12) aufweist, die mit jeweils einem Endabschnitt (8b) des Belaghaltebügels (8) in Eingriff stehen, wobei jeder Federarm (12) einen Laschenabschnitt (12a) mit einer an seinem freien Ende umgebogenen Lasche (12b) aufweist, wobei die Laschen (12b) jeweils zu der Bremsscheibendrehachse (2a) hin umgebogen und spiegelbildlich angeordnet sind, wobei sich jeder Laschenabschnitt (12a) in der Richtung der Bremsscheibendrehachse (2a) erstreckt und an einem Abschnitt eines Endabschnitts (8b) des Belaghaltebügels (8) anliegt, und wobei jede Lasche (12b) eine Ecke des Endabschnitts (8b) des Belaghaltebügels (8) umgibt, **dadurch gekennzeichnet, dass** der Bremsbelagsatz (100) die beiden Bremsbeläge (4,5) auf der jeweiligen Belagrückenplatte (4a, 5a), die zugehörigen Belaghaltefedern (6, 7), den Belaghaltebügel (8), die Sicherungsvorrichtung (10) und mindestens ein Montagewerkzeug (18, 18') umfasst, wobei das Montagewerkzeug (18, 18') eine Basis, eine Spreizeinrichtung und eine Führungseinrichtung aufweist, wobei die Basis einen Querträger (18a, 18'a, 18"a) aufweist, an welchem zwei Plattenabschnitte (18b, 18'b) mit jeweils einer Schräge (18c, 25) angebracht sind und die Spreizeinrichtung bilden.

17. Bremsbelagsatz (100) nach Anspruch 16, **dadurch gekennzeichnet, dass** die Führungseinrichtung des Montagewerkzeugs (18) jeweils eine Seitenwand (19) mit Führungsabschnitten (19a, 19c, 19f), die jeweils an einem Plattenabschnitt (18b) angebracht sind, umfasst.

18. Bremsbelagsatz (100) nach Anspruch 16, **dadurch gekennzeichnet, dass** die Führungseinrichtung des Montagewerkzeugs (18') jeweils eine horizontale Führung (27) an jeweils einem Plattenabschnitt (18'b) aufweist.

19. Bremsbelagsatz (100) nach Anspruch 17 oder 18, **dadurch gekennzeichnet, dass** das Montagewerkzeug (18, 18') weiterhin eine Halteeinrichtung aufweist.

20. Bremsbelagsatz (100) nach Anspruch 19, **dadurch gekennzeichnet, dass** die Halteeinrichtung des Montagewerkzeugs (18) aus der Führungseinrichtung mit den Seitenwänden (19) mit Führungsabschnitten (19a, 19c, 19f) gebildet ist.

21. Bremsbelagsatz (100) nach Anspruch 19, **dadurch gekennzeichnet, dass** die Halteeinrichtung des Montagewerkzeugs (18') Anschläge (23c) und axiale Führungen (28) aufweist.

## Claims

1. Mounting tool (13) for mounting and/or removing a pad retaining clip (8) on a securing apparatus (10) of a disc brake (1), wherein the securing apparatus (10) has a securing element (11) which is permanently connected to a rear-side backing plate (5a) of a rear-side brake pad (5) of the associated disc brake (1), which securing element has at least two spring arms (12), wherein each spring arm (12) has a lug section (12a) with a lug (12b) bent at its free end, wherein each of the lugs (12b) is bent towards a disc brake axis of rotation (2a) of the disc brake (1) to be assigned and arranged in a mirror-image manner, wherein each lug section (12a) extends in the direction of the disc brake axis of rotation (2a) and bears against a section of an end section (8b) of the pad retaining clip (8), and wherein each lug (12b) surrounds a corner of the end section (8b) of the pad retaining clip (8), **characterised in that** the mounting tool (13) has a base, a spreading device and a guide device, wherein the base has a base plate (13a) to which two finger plates (14) with a bevel (14a) each are attached and form the spreading device, wherein the guide device comprises two fingers (15) with an oblique surface (15a) each, wherein the two fingers (15) are arranged on the base plate (13a) above the two finger plates (14), wherein the mounting tool (13) furthermore has a retaining device, wherein the retaining device comprises one inner longitudinal wall (13b) and one outer longitudinal wall (13c) each with a receptacle (13d) each, and wherein the one inner longitudinal wall (13b) each and the one outer longitudinal wall (13c) each on each longitudinal side of the base plate (13a) are arranged parallel to one another with a spacing, wherein the receptacle (13d) is arranged in each case between the one inner longitudinal wall (13b) each and the one outer longitudinal wall (13c) each.

2. Mounting tool (13) according to claim 1, **characterised in that** the oblique surfaces (15a) point towards the two finger plates (14).

3. Mounting tool (18, 18') for mounting and/or removing a pad retaining clip (8) on a securing apparatus (10) of a disc brake (1), wherein the securing apparatus (10) has a securing element (11) which is permanently connected to a rear-side backing plate (5a) of a rear-side brake pad (5) of the associated disc brake (1), which securing element has at least two spring arms (12), wherein each spring arm (12) has a lug section (12a) with a lug (12b) bent at its free end, wherein each of the lugs (12b) is bent towards a disc brake axis of rotation (2a) of the disc brake (1) to be assigned and arranged in a mirror-image manner, wherein each lug section (12a) extends in the direction of the disc brake axis of rotation (2a) and bears against a section of an end section (8b) of the pad retaining clip (8), and wherein each lug (12b) surrounds a corner of the end section (8b) of the pad retaining clip (8), **characterised in that** the mounting tool (18, 18') has a base, a spreading device and a guide device, wherein the base has a transverse member (18a, 18'a, 18"a) to which two plate sections (18b, 18'b) with one bevel (18c, 25) each are attached and form the spreading device.

4. Mounting tool (18) according to claim 3, **characterised in that** each guide device comprises one side wall (19) with guide sections (19a, 19c, 19f) which are each attached to a plate section (18b).

5. Mounting tool (18) according to claim 3, **characterised in that** each guide device has one horizontal guide (27) on one plate section (18'b) each.

6. Mounting tool (18) according to claim 4 or 5, **characterised in that** the mounting tool (18, 18') furthermore has a retaining device.

7. Mounting tool (18) according to claim 6, **characterised in that** the retaining device is formed from the guide device with the side walls (19) with guide sections (19a, 19c, 19f).

8. Mounting tool (18) according to claim 6, **characterised in that** the retaining device has stops (23c) and axial guides (28).

9. Disc brake (1) for a motor vehicle, in particular for a commercial vehicle, having a brake disc (2) with a brake disc axis of rotation (2a), a brake calliper (3), in particular a sliding calliper, with an application section (3a) and a rear section (3b), having at least two brake pads (4, 5) with one pad rear plate (4a, 5a) each equipped with an anti-rattle spring (6, 7), which brake pads are supported in each case under the preload of a pad retaining clip (8) detachably fastened to the brake calliper (3), and of which brake pads an application-side brake pad (4) is assigned to the application section (3a) and a rear-side brake pad (5) is assigned to the rear section (3b), and having a securing apparatus (10) for securing the position of the pad retaining clip (8), wherein the securing apparatus (10) has a securing element (11) which is permanently connected to the rear-side backing plate (5a) of the rear-side brake pad (5) and which has two spring arms (12) which engage with one end section (8b) each of the pad retaining clip (8), wherein each spring arm (12) has a lug section (12a) with a lug (12b) bent at its free end, wherein each of the lugs (12b) is bent towards the disc brake axis of rotation (2a) and arranged in a mirror-image manner, wherein each lug section (12a) extends in the direction of the disc brake axis of rotation (2a) and bears against a section of an end section (8b) of the pad retaining clip (8), and wherein each lug (12b) surrounds a corner of the end section (8b) of the pad retaining clip (8), **characterised in that** the securing element (11) of the securing apparatus (10) is equipped with a mounting tool (18, 18'), wherein the mounting tool (18, 18') has a base, a spreading device and a guide device, wherein the base has a transverse member (18a, 18'a, 18"a) to which two plate sections (18b, 18'b) with one bevel (18c, 25) each are attached and form the spreading device.

10. Disc bare (1) according to claim 9, **characterised in that** the guide device of the mounting tool (18) has a side wall (19) each with guide sections (19a, 19c, 19f) which are each attached to a plate section (18b).

11. Disc bare (1) according to claim 9, **characterised in that** the guide device of the mounting tool (18') has one horizontal guide (27) on one plate section (18'b) each.

12. Disc bare (1) according to claim 10 or 11, **characterised in that** the mounting tool (18, 18') furthermore has a retaining device.

13. Disc bare (1) according to claim 12, **characterised in that** the retaining device of the mounting tool (18) is formed from the guide device with the side walls (19) with guide sections (19a, 19c, 19f).

14. Disc bare (1) according to claim 12, **characterised in that** the retaining device of the mounting tool (18') has stops (23c) and axial guides (28).

15. Brake pad set (100) for a disc brake (1) for a vehicle, in particular for a commercial vehicle, the disc brake (1) having a brake disc (2) with a brake disc axis of rotation (2a), having a brake calliper (3), in particular a sliding calliper, with an application section (3a) and a rear section (3b), having at least two brake pads (4,5) with one pad rear plate (4a, 5a) each equipped with an anti-rattle spring (6, 7), which brake pads are supported in each case under the preload of a pad retaining clip (8) detachably fastened to the brake calliper (3), and of which brake pads an application-side brake pad (4) is assigned to the application section (3a) and a rear-side brake pad (5) is assigned to the rear section (3b), and having a securing apparatus (10) for securing the position of the pad retaining clip (8), wherein the securing apparatus (10) has a securing element (11) which is permanently connected to the rear-side backing plate (5a) of the rear-side brake pad (5) and which has two spring arms (12) which engage with one end section (8b) each of the pad retaining clip (8), wherein each spring arm (12) has a lug section (12a) with a lug (12b) bent at its free end, wherein each of the lugs (12b) is bent towards the disc brake axis of rotation (2a) and arranged in a mirror-image manner, wherein each lug section (12a) extends in the direction of the disc brake axis of rotation (2a) and bears against a section of an end section (8b) of the pad retaining clip (8), and wherein each lug (12b) surrounds a corner of the end section (8b) of the pad retaining clip (8), **characterised in that** the brake pad set (100) comprises the two brake pads (4,5) on the respective pad rear plate (4a, 5a), the associated anti-rattle springs (6, 7), the pad retaining clip (8), the securing apparatus (10) and at least one mounting tool (13), wherein the mounting tool (13) has a base, a spreading device and a guide device, wherein the base has a base plate (13a) to which two finger plates (14) with a bevel (14a) each are attached and form the spreading device, wherein the guide device comprises two fingers (15) with an oblique surface (15a) each, wherein the two fingers (15) are arranged on the base plate (13a) above the two finger plates (14), wherein the mounting tool (13) furthermore has a retaining device, wherein the retaining device comprises one inner longitudinal wall (13b) and one outer longitudinal wall (13c) each with a receptacle (13d) each, and wherein the one inner longitudinal wall (13b) each and the one outer longitudinal wall (13c) each on each longitudinal side of the base plate (13a) are arranged parallel to one another with a spacing, wherein the receptacle (13d) is arranged in each case between the one inner longitudinal wall (13b) each and the one outer longitudinal wall (13c) each.

16. Brake pad set (100) for a disc brake (1) for a vehicle, in particular for a commercial vehicle, the disc brake (1) having a brake disc (2) with a brake disc axis of rotation (2a), having a brake calliper (3), in particular a sliding calliper, with an application section (3a) and a rear section (3b), having at least two brake pads (4,5) with one pad rear plate (4a, 5a) each equipped with an anti-rattle spring (6, 7), which brake pads are supported in each case under the preload of a pad retaining clip (8) detachably fastened to the brake calliper (3), and of which brake pads an application-side brake pad (4) is assigned to the application section (3a) and a rear-side brake pad (5) is assigned to the rear section (3b), and having a securing apparatus (10) for securing the position of the pad retaining clip (8), wherein the securing apparatus (10) has a securing element (11) which is permanently connected to the rear-side backing plate (5a) of the rear-side brake pad (5) and which has two spring arms (12) which engage with one end section (8b) each of the pad retaining clip (8), wherein each spring arm (12) has a lug section (12a) with a lug (12b) bent at its free end, wherein each of the lugs (12b) is bent towards the disc brake axis of rotation (2a) and arranged in a mirror-image manner, wherein each lug section (12a) extends in the direction of the disc brake axis of rotation (2a) and bears against a section of an end section (8b) of the pad retaining clip (8), and wherein each lug (12b) surrounds a corner of the end section (8b) of the pad retaining clip (8), **characterised in that** the brake pad set (100) comprises the two brake pads (4,5) on the respective pad rear plate (4a, 5a), the associated anti-rattle springs (6, 7), the pad retaining clip (8), the securing apparatus (10) and at least one mounting tool (18, 18'), wherein the the mounting tool (18, 18') has a base, a spreading device and a guide device, wherein the base has a transverse member (18a, 18'a, 18"a) to which two plate sections (18b, 18'b) with one bevel (18c, 25) each are attached and form the spreading device.

17. Brake pad set (100) according to claim 16, **characterised in that** the guide device of the mounting tool (18) has a side wall (19) each with guide sections (19a, 19c, 19f), each of which is mounted on a plate section (18b).

18. Brake pad set (100) according to claim 16, **characterised in that** the guide device of the mounting tool (18') has a horizontal guide (27) each at one plate section (18'b) each.

19. Brake pad set (100) according to claim 17 or 18, **characterised in that** the mounting tool (18, 18') furthermore comprises a retaining device.

20. Brake pad set (100) according to claim 20, **characterised in that** the retaining device of the mounting tool (18) is formed from the guide device with the side walls (19) with guide sections (19a, 19c, 19f).

21. Brake pad set (100) according to claim 20, **characterised in that** the retaining device of the mounting tool (18') has stops (23c) and axial guides (28).

## Revendications

1. Outil (13) de montage pour le montage et/ou le démontage d'un étrier (8) de retenue de plaquette sur un dispositif (10) de fixation d'un frein (1) à disque, dans lequel le dispositif (10) de fixation a un élément (11) de fixation, assemblé fixement à une plaque (5a) de support de plaquette du côté arrière d'une plaquette (5) de frein du côté arrière du frein (1) à disque à associer, et ayant au moins deux bras (12) de ressort, chaque bras (12) de ressort ayant une partie (12a) de languette, ayant une languette (12b) coudée à son extrémité libre, les languettes (12b) étant coudées chacune par rapport à un axe (2a) de rotation du disque (1) de frein à associer et étant disposées symétriques comme en un miroir, chaque partie (12a) de languette s'étendant dans la direction de l'axe (2a) de rotation du disque de frein et s'appliquant à une partie d'une partie (8b) d'extrémité de l'étrier (1) de retenue de plaquette, chaque languette (12b) entourant un coin de la partie (8b) d'extrémité de l'étrier (8) de retenue de plaquette, **caractérisé en ce que** l'outil (13) de montage a une base, un dispositif d'écartement et un dispositif de guidage, la base ayant une plaque (13a) de base, sur laquelle sont montées deux plaques (14) formant doigt, ayant chacune un biseau (14a) et forment le dispositif d'écartement, le dispositif de guidage comprenant deux doigts (15) ayant, respectivement, une surface (15a) inclinée, les deux doigts (15) étant montés sur la plaque (13a) de base par l'intermédiaire des deux plaques (14) formant doigt, l'outil (13) de montage ayant, en outre, un dispositif de retenue, le dispositif de retenue comprenant une paroi (13b) longitudinale intérieure et une paroi (13c) longitudinale extérieure, ayant chacune un logement (13d), et dans lequel la une paroi (13b) longitudinale intérieure et la une paroi (13c) longitudinale extérieure sont montées sur chaque grand côté de la plaque (13a) de base, à distance en étant parallèles entre elles, le respectivement un logement (13d) étant disposé entre la respectivement une paroi (13b) longitudinale intérieure et la respectivement une paroi (13c) longitudinale extérieure.

2. Outil (13) de montage suivant la revendication 1, **caractérisé en ce que** les surfaces (15a) inclinées sont tournées vers les deux plaques (14) formant doigt.

3. Outil (18, 18') de montage pour le montage et/ou le démontage d'un étrier (8) de retenue de plaquette sur un dispositif (10) de fixation d'un frein (1) à disque, dans lequel le dispositif (10) de fixation a un élément (11) de fixation, assemblé fixement à une plaque (5a) de support de plaquette du côté arrière d'une plaquette (5) de frein du côté arrière du frein (1) à disque à associer, et ayant au moins deux bras (12) de ressort, chaque bras (12) de ressort ayant une partie (12a) de languette, ayant une languette (12b) coudée à son extrémité libre, les languettes (12b) étant coudées chacune par rapport à un axe (2a) de rotation du disque (1) de frein à associer et étant disposées symétriques comme en un miroir, chaque partie (12a) de languette s'étendant dans la direction de l'axe (2a) de rotation du disque de frein et s'appliquant à une partie d'une partie (8b) d'extrémité de l'étrier (1) de retenue de plaquette, chaque languette (12b) entourant un coin de la partie (8b) d'extrémité de l'étrier (8) de retenue de plaquette, **caractérisé en ce que** l'outil (18, 18') de montage a une base, un dispositif d'écartement et un dispositif de guidage, la base ayant une traverse (18a, 18'a, 18''a), sur laquelle sont montées deux parties (18b, 18'b) de plaque ayant chacune un biseau (18c, 25) et formant le dispositif d'écartement.

4. Outil (18) de montage suivant la revendication 3, **caractérisé en ce que** le dispositif de guidage comprend une paroi (19) latérale ayant des parties (19a, 19c, 19f) de guidage, qui sont disposées, respectivement, sur une partie (18b) de la plaque.

5. Outil (18') de montage suivant la revendication 3, **caractérisé en ce que** le dispositif de guidage a, respectivement, un guidage (27) horizontal sur, respectivement, une partie (18'b) de la plaque.

6. Outil (18) de montage suivant la revendication 4 ou 5, **caractérisé en ce que** l'outil (18, 18') de montage a, en outre, un dispositif de retenue.

7. Outil (18) de montage suivant la revendication 6, **caractérisé en ce que** le dispositif de retenue est formé à partir du dispositif de guidage par les parois (19) latérales ayant des parties (19a, 19c, 19f) de guidage.

8. Outil (18') de montage suivant la revendication 6, **caractérisé en ce que** le dispositif de retenue a des butées (23c) et des guidages (28) axiaux.

9. Frein (1) à disque d'un véhicule, notamment d'un véhicule utilitaire, comportant un disque (2) de frein, ayant un axe (2a) de rotation du disque de frein, un étrier (3) de frein, notamment un étrier coulissant, ayant une partie (3) de serrage et une partie (3b) arrière, au moins deux plaquettes (4, 5) de frein, ayant chacune une plaque (4a, 5a) arrière de plaquette, pourvue d'un ressort (6, 7) de retenue de plaquette, qui sont appuyées, respectivement, sous précontrainte par un étrier (8) de retenue de plaquettes, fixé de manière amovible à l'étrier de frein, et par lesquelles une plaquette (4) de frein du côté du serrage est associée à la partie (3a) de serrage, et une plaquette (5) de frein du côté arrière est associée à la partie (3b) arrière, ainsi qu'un dispositif (10) de fixation pour fixer la position de l'étrier (8) de retenue de plaquette, le dispositif (10) de fixation ayant un élément (11) de fixation, assemblé fixement à la plaque (5a) de support de plaquette du côté arrière de la plaquette (5) de frein du côté arrière et ayant deux bras (12) de ressort, qui sont en prise avec, respectivement, une partie (8b) d'extrémité de l'étrier (8) de retenue de plaquette, chaque bras (12) de ressort, ayant une partie (12a) de languette, ayant une languette (12b) coudée à son extrémité libre, les languettes (12b) étant coudées, respectivement, par rapport à l'axe (2a) de rotation du disque de frein et étant disposées en étant symétriques comme en un miroir, chaque partie (12a) de languette s'étendant dans la direction de l'axe (2a) de rotation du disque de frein et s'appliquant à une partie d'une partie (8b) d'extrémité de l'étrier (8) de retenue de plaquette, et chaque languette (12b) entourant un coin de la partie (8b) d'extrémité de l'étrier (8) de retenue de plaquette, **caractérisé en ce que** l'élément (11) de fixation du dispositif (10) de fixation est pourvu d'un outil (18, 18') de montage, l'outil (18, 18') de montage ayant une base, un dispositif d'écartement et un dispositif de guidage, la base ayant une traverse (18a, 18'a, 18''a), sur laquelle deux parties (18b, 18'b) de plaque sont disposées en ayant chacune un biseau (18c, 25) et forment le dispositif d'écartement.

10. Frein (1) à disque suivant la revendication 9, **caractérisé en ce que** le dispositif de guidage de l'outil (18) de montage comprend, respectivement, une paroi (19) latérale ayant des parties (19a, 19c, 19f) de guidage, qui sont disposées, respectivement, sur une partie (18b) de plaque.

11. Frein (1) à disque suivant la revendication 9, **caractérisé en ce que** le dispositif de guidage de l'outil (18') de montage a, respectivement, un guidage (27) horizontal sur, respectivement, une partie (18'b) de plaque.

12. Frein (1) à disque suivant la revendication 10 ou 11, **caractérisé en ce que** l'outil (18, 18') de montage a, en outre, un dispositif de retenue.

13. Frein (1) à disque suivant la revendication 12, **caractérisé en ce que** le dispositif de retenue de l'outil (18) de montage est formé, à partir du dispositif de guidage, par les parois (19) latérales ayant des parties (19a, 19c, 19f) de guidage.

14. Frein (1) à disque suivant la revendication 12, **caractérisé en ce que** le dispositif de retenue de l'outil (18') de montage a des butées (23c) et des guidages (28) axiaux.

15. Jeu (100) de plaquettes de frein d'un frein (1) à disque d'un véhicule, notamment d'un véhicule utilitaire, le frein (1) à disque comprenant un disque (2) de frein ayant un axe (2a) de rotation de disque de frein, un étrier (3) de frein, notamment un étrier coulissant, ayant une partie (3a) de serrage et une partie (3b) arrière, au moins deux plaquettes (4, 5) de frein, ayant chacune une plaque (4a, 5a) arrière de plaquette pourvue d'un ressort (6, 7) de retenue de plaquette, qui sont appuyées, respectivement sous précontrainte par un étrier (8) de retenue de plaquette, fixé de manière amovible à l'étrier (3) de frein, et par lesquelles une plaquette (4) de frein du côté de serrage est associée à la partie (3a) de serrage et une plaquette (5) de frein du côté arrière est associée à la partie (3b) arrière, ainsi qu'un dispositif (10) de fixation pour fixer la position de l'étrier (8) de retenue de plaquette, le dispositif (10) de fixation ayant un élément (11) de fixation, assemblé fixement à la plaque (5a) de support de la plaquette (5) de frein du côté arrière et ayant deux bras de ressort, qui sont en prise chacun avec une partie (8b) d'extrémité de l'étrier (8) de retenue de plaquette, chaque bras (12) de ressort, ayant une partie (12a) de languette, ayant une languette (12b) coudée à son extrémité libre, les languettes (12b) étant coudées, respectivement, par rapport à l'axe (2a) de disque de frein et étant disposées symétriques comme en un miroir, chaque partie (12a) de languette s'étendant dans la direction de l'axe (2a) de rotation du disque de frein et s'appliquant à une partie d'une partie (8b) d'extrémité de l'étrier (8) de retenue de plaquette et chaque languette (12b) entourant un coin de la partie (8b) d'extrémité de l'étrier (8) de retenue de plaquette, **caractérisé en ce que** le jeu (100) de plaquettes de frein comprend les deux plaquettes (4, 5) de frein sur la plaque (4a, 5a) arrière de plaquette respective, les ressorts (6, 7) de retenue de plaquette associés, l'étrier (8) de retenue de plaquette, le dispositif (10) de fixation et au moins un outil (13) de montage, l'outil (13) de montage ayant une base, un dispositif d'écartement et un dispositif de guidage, la base ayant une plaque (13a) de base, sur laquelle sont montées deux plaques (14) formant doigt, ayant chacune un biseau (14a) et formant le dispositif d'écartement, le dispositif de guidage comprenant deux doigts (15) ayant, respectivement, une surface (15a) inclinée, les deux doigts (15) étant montés sur la plaque (13a) de base par l'intermédiaire des deux plaques (14) formant doigt, l'outil (13) de montage ayant, en outre, un dispositif de retenue, le dispositif de retenue comprenant une paroi (13b) longitudinale intérieure et une paroi (13c) longitudinale extérieure, ayant chacune un logement (13d), et dans lequel la une paroi (13b) longitudinale intérieure et la une paroi (13c) longitudinale extérieure sont montées sur chaque grand côté de la plaque (13a) de base, à distance en étant parallèles respectivement entre elles, le un logement (13d) étant disposé entre la une paroi (13b) longitudinale intérieure et respectivement une paroi (13c) longitudinale extérieure.

16. Jeu (100) de plaquettes de frein d'un frein (1) à disque d'un véhicule, notamment d'un véhicule utilitaire, dans lequel le frein (1) à disque comprend un disque (2) de frein ayant un axe (2a) de rotation de disque de frein, un étrier (3) de frein, notamment un étrier coulissant, ayant une partie (3a) de serrage et une partie (3b) arrière, au moins deux plaquettes (4, 5) de frein, ayant chacune une plaque (4a, 5a) arrière de plaquette pourvue d'un ressort (6, 7) de retenue de plaquette, qui sont appuyées, respectivement sous précontrainte par un étrier (8) de retenue de plaquette, fixé de manière amovible à l'étrier (3) de frein, et par lesquelles une plaquette (4) de frein du côté de serrage est associée à la partie (3a) de serrage et une plaquette (5) de frein du côté arrière est associée à la partie (3b) arrière, ainsi qu'un dispositif (10) de fixation pour fixer la position de l'étrier (8) de retenue de plaquette, le dispositif (10) de fixation ayant un élément (11) de fixation, assemblé fixement à la plaque (5a) de support de la plaquette (5) de frein du côté arrière et ayant deux bras de ressort, qui sont en prise chacun avec une partie (8b) d'extrémité de l'étrier (8) de retenue de plaquette, chaque bras (12) de ressort, ayant une partie (12a) de languette, ayant une languette (12b) coudée à son extrémité libre, les languettes (12b) étant coudées, respectivement, par rapport à l'axe (2a) de disque de frein et étant disposées symétriques comme en un miroir, chaque partie (12a) de languette s'étendant dans la direction de l'axe (2a) de rotation du disque de frein et s'appliquant à une partie d'une partie (8b) d'extrémité de l'étrier (8) de retenue de plaquette et chaque languette (12b) entourant un coin de la partie (8b) d'extrémité de l'étrier (8) de retenue de plaquette, **caractérisé en ce que** le jeu (100) de plaquettes de frein des deux plaquettes (4, 5) de frein comprend, sur la plaque (4a, 5a) arrière de plaquette respective, les ressorts (6, 7) de retenue de plaquette associés, l'étrier (8) de retenue de plaquette, le dispositif (10) de fixation et au moins un outil (18, 18') de montage, l'outil (18, 18') de montage ayant une base, un dispositif d'écartement et un dispositif de guidage, la base ayant une traverse (18a, 18'a, 18''a), sur laquelle sont montées deux parties (18b, 18'b) de plaque, qui ont chacune un biseau (18c, 25) et qui forment le dispositif d'écartement.

17. Jeu (100) de plaquettes de frein suivant la revendication (16), **caractérisé en ce que** le dispositif de guidage de l'outil (18) de montage comprend, respectivement, une paroi (19) latérale ayant des parties (19a, 19c, 19f) de guidage, qui sont montées chacune sur une partie (18b) de plaque.

18. Jeu (100) de plaquettes de frein suivant la revendication 16, **caractérisé en ce que** le dispositif de guidage de l'outil (18') de montage a, respectivement, un guidage (27) horizontal sur, respectivement, une partie (18'b) de plaque.

19. Jeu (100) de plaquettes de frein suivant la revendication 17 ou 18, **caractérisé en ce que** l'outil (18, 18') de montage a, en outre, un dispositif de retenue.

20. Jeu (100) de plaquettes de frein suivant la revendication 19, **caractérisé en ce que** le dispositif de retenue de l'outil (18) de montage est formé, à partir du dispositif de guidage, par les parois (19) latérales ayant des parties (19a, 19c, 19f) de guidage.

21. Jeu (100) de plaquettes de frein suivant la revendication 19, **caractérisé en ce que** le dispositif de retenue de l'outil (18') de montage a des butées (23c) et des guidages (28) axiaux.
